(19) Europäisches Patentamt
European Patent Office
Office européen des brevets

(11) **EP 3 656 645 B1**

(12) **EUROPEAN PATENT SPECIFICATION**

(45) Date of publication and mention of the grant of the patent:
**28.09.2022  Bulletin 2022/39**

(21) Application number: **19195583.0**

(22) Date of filing: **05.09.2019**

(51) International Patent Classification (IPC):
**B61L 27/12** *(2022.01)*      **B61L 27/14** *(2022.01)*

(52) Cooperative Patent Classification (CPC):
**B61L 27/12; B61L 27/14**

(54) **INFORMATION PROCESSING APPARATUS, METHOD FOR THE SAME, AND COMPUTER PROGRAM**

INFORMATIONSVERARBEITUNGSVORRICHTUNG, VERFAHREN DAFÜR UND COMPUTERPROGRAMM

APPAREIL DE TRAITEMENT D'INFORMATIONS, PROCÉDÉ ASSOCIÉ ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **20.11.2018   JP 2018217656**

(43) Date of publication of application:
**27.05.2020   Bulletin 2020/22**

(73) Proprietor: **KABUSHIKI KAISHA TOSHIBA**
**Minato-ku**
**Tokyo (JP)**

(72) Inventors:
• **OTSUKI, Tomoshi**
  **Tokyo (JP)**
• **SAKAMOTO, Hideo**
  **Tokyo (JP)**
• **AISU, Hideyuki**
  **Tokyo (JP)**
• **YOSHIDA, Takufumi**
  **Tokyo (JP)**
• **KUBO, Hideki**
  **Kanagawa (JP)**

(74) Representative: **Marks & Clerk LLP**
**15 Fetter Lane**
**London EC4A 1BW (GB)**

(56) References cited:
**US-A1- 2016 267 390**

• YUAN ET AL: "Optimizing capacity utilization of stations by estimating knock-on train delays", TRANSPORTATION RESEARCH PART B. METHODOLOGICAL, OXFORD, GB, vol. 41, no. 2, 1 February 2007 (2007-02-01), pages 202-217, XP005661321, ISSN: 0191-2615, DOI: 10.1016/J.TRB.2006.02.004
• BURKHARD FRANKE ET AL: "OnTime - Netzweite Analyse der Fahrplanstabilität", EISENBAHNTECHNISCHE RUNDSCHAU (ETR), vol. 61, no. 6, 1 June 2012 (2012-06-01), pages 36-40, XP055718852,
• THORSTEN BÜKER ET AL: "Stochastic modelling of delay propagation in large networks", JOURNAL OF RAIL TRANSPORT PLANNING & MANAGEMENT, vol. 2, 1 January 2012 (2012-01-01), pages 34-50, XP055718857,
• THORSTEN BUKER: "Ausgewählte Aspekte der Verspätungsfortpflanzung in Netzen", DISSERTATION, 1 January 2010 (2010-01-01), pages 15-221, XP055718860,

**Description**

FIELD

The present disclosure relates to an information processing apparatus, a method for the same, and a computer program.

BACKGROUND

For railway companies and the like, delays in service planning diagrams, which is simply called diagrams, are serious problems bringing about decreases in sales and increases in costs such as penalty payment. Accordingly, it is preferable to create a diagram that is as robust as possible to withstand delays. If a diagram can be evaluated by using as less historic data on operations as possible, such a diagram evaluation method is of great worth.

Diagram evaluation methods include a method in which a probability of delay at each station is calculated as one example. There is, for example, a method in which a probability of delay at each station is output by using the Bayesian network scheme. However, if the Bayesian network is used, big historic data, such as journal information for a certain period of time, is required to acquire information on correlations of delays between stations. There is, as another example, also a method in which Monte Carlo simulation is performed by using a diagram and past delay probability records and a frequency distribution for a delay at each station is created. However, Monte Carlo simulation generally takes a long time to convergence and therefore has a problem that a large number of repetitions are required.

YUAN ET AL: "Optimizing capacity utilization of stations by estimating knock-on train delays" TRANSPORTATION RESEARCH PART B, vol. 41, no. 2, 1 February 2007 (2007-02-01), pages 202-217 relates to an analytical stochastic model of train delay propagations in stations. The model is solved on the basis of a numerical approximation of the Stieltjes convolution of individual independent distributions that can be integrated into a large computerized decision support tool for timetable design and train dispatching.

Thorsten Boker et al: "Stochastic modelling of delay propagation in large networks", Journal of Rail Transport Planning & Management, vol. 2, 1 January 2012 (2012-01-01), pages 34-50 relates to analytical procedures to compute propagation delays in railway networks. Here, a formulation of delay propagation is presented by means of an activity graph.

BRIEF DESCRIPTION OF THE DRAWINGS

    FIG. 1 is a block diagram of a diagram evaluation apparatus, which is an information processing apparatus according to the present embodiment;
    FIGS. 2A and 2B shows an outline of the present embodiment;
    FIG. 3 shows an example of an interface screen (input screen) on which diagram information is input;
    FIG. 4 shows part of the diagram information in the form of a table;
    FIG. 5 shows a plurality of train lines included in the diagram information, in the form of graphs;
    FIG. 6 shows another example of the diagram information;
    FIG. 7 shows a plurality of train lines included in the diagram information shown in FIG. 6, in the form of graphs;
    FIG. 8 shows examples of statistical values;
    FIG. 9 shows an example of a geometric distribution as an event-to-event delay probability distribution;
    FIG. 10 shows an example of a screen on which an average delay time is input;
    FIG. 11 shows an example of the screen on which an average delay time is input;
    FIG. 12 shows an example of the screen on which an average delay time is input;
    FIG. 13 shows examples of minimum required time interval information;
    FIG. 14 shows examples of minimum required time interval information;
    FIG. 15 shows an example of a screen on which a minimum required time interval and a margin time are input for train line on a train;
    FIG. 16 shows an example of event delay probability distributions generated by a delay probability distribution calculator;
    FIG. 17 is a diagram of graphs representing event delay probability distributions for events 1 to 4;
    FIG. 18 is a flowchart showing an outline of processing in which the event delay probability distributions are generated by the delay probability distribution calculator;
    FIG. 19 is a detailed flowchart of Step_A in FIG. 18;
    FIG. 20 shows an example of event information generated through the processing in FIG. 18;

FIG. 21 is a detailed flowchart of Step_D in FIG. 18;

FIG. 22 shows an outline of the processing in Step_D when two preceding events exist;

FIG. 23 shows a specific example of Step_D;

FIG. 24 shows another specific example of Step_D;

FIGS. 25(A) to 25(C) show a specific example of processing for generating a combined probability distribution;

FIG. 26 is a diagram for describing a specific example of round-up processing;

FIG. 27 shows an example of an output table including delay probability distributions generated through the processing according to the present embodiment;

FIG. 28 shows an example of generation of an expected train line;

FIG. 29 is a diagram for describing a delay limit excess probability;

FIG. 30 is a diagram for describing an expected travel time;

FIG. 31 is a diagram for describing a train line rate at a specific station in a specific time slot;

FIG. 32 is a diagram for describing a train line rate at a specific time;

FIG. 33 is a diagram for describing an arrival and departure rate at specific stations in a specific time slot; and

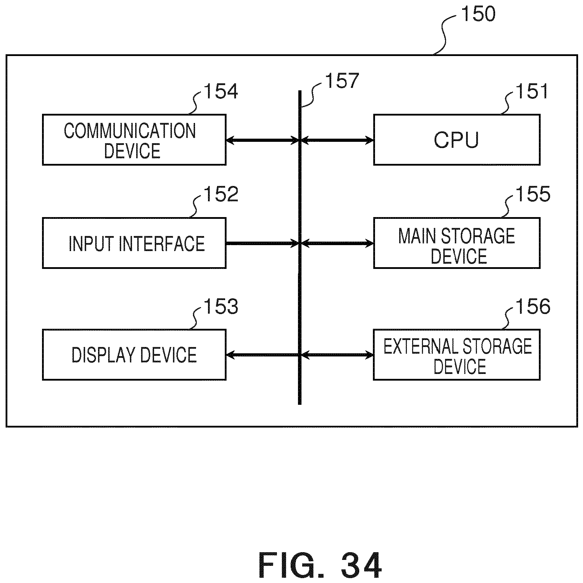

FIG. 34 shows a hardware configuration of the diagram evaluation apparatus (information processing apparatus) according to the present embodiment.

## DETAILED DESCRIPTION

The invention is set out in the independent claims. In a first aspect, an information processing apparatus is provided as recited in claim 1. In a second aspect an information processing method is provided as recited in claim 10. In a third aspect, a computer readable medium is provided as recited in claim 11.

Hereinafter, approaches will be described with reference to drawings.

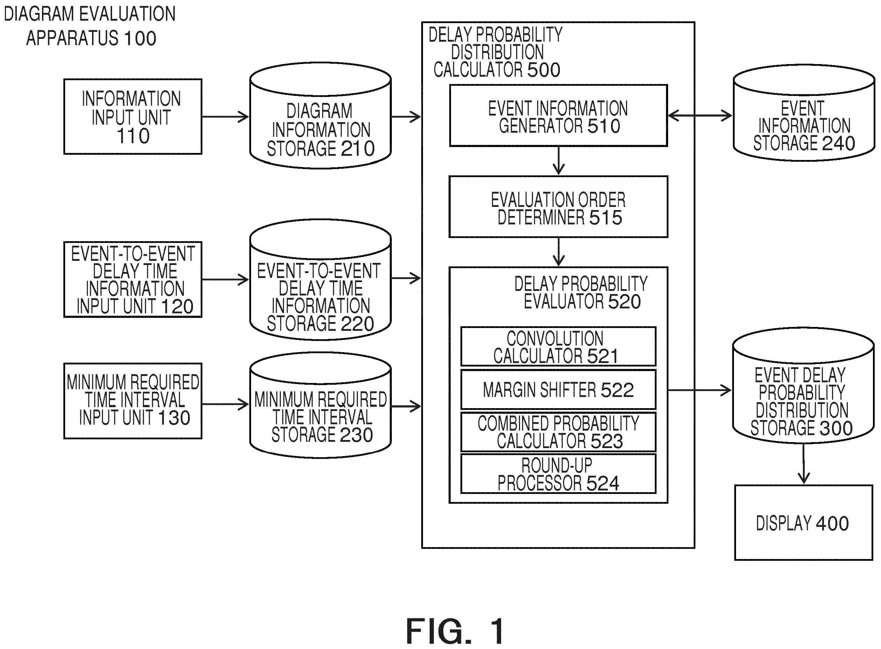

FIG. 1 is a block diagram of a diagram evaluation apparatus 100, which is an information processing apparatus according to the present embodiment. The diagram evaluation apparatus 100 includes a diagram information input unit 110, an event-to-event delay time information input unit 120, a minimum required time interval input unit 130, a delay probability distribution calculator 500, a display 400, and a plurality of storages. The plurality of storages include a diagram information storage 210, an event-to-event delay time information storage 220, a minimum required time interval storage 230, an event information storage 240, and an event delay probability distribution storage 300. The diagram evaluation apparatus 100 makes it possible to generate a probability distribution of delay time in each event (event delay probability distribution) in diagram information rapidly, and thus to evaluate the diagram information rapidly. The diagram information defines schedules of vehicles such as trains or buses (trains will be assumed hereinafter) tripping along a trip path. Examples of each event in the diagram information include an arrival event that is an arrival at a certain station at a certain time, a departure event that is a departure from a certain station at a certain time, and a pass event that is a pass through a certain station at a certain time. Prior to a description of the diagram evaluation apparatus 100, an outline of the present embodiment will be described.

Generally, in generation of diagram information, a delay of a train is supposed, and a time point of an event (departure time, arrival time, or the like) is determined in many cases by adding a margin time to a minimum value of a run time between stations or a minimum value of a dwell time at a station. Moreover, a restriction related to a time interval (time interval restriction) is provided in many cases between a train line of a certain train (self train line) and a train line of another train preceding the certain train (preceding train line). If a delay time on the preceding train line exceeds a predetermined value, the delay time influence on the train of the self train line. Specifically, there are two types of delays: a delay on the self train line itself (primary delay) and a delay due to the preceding train line (secondary delay). In more detail, delays include a delay due to a preceding event on the self train line and a delay due to a preceding event on the preceding train line. The two type of a delay on the self train line and a delay from the preceding train line influences on the train of the self train line.

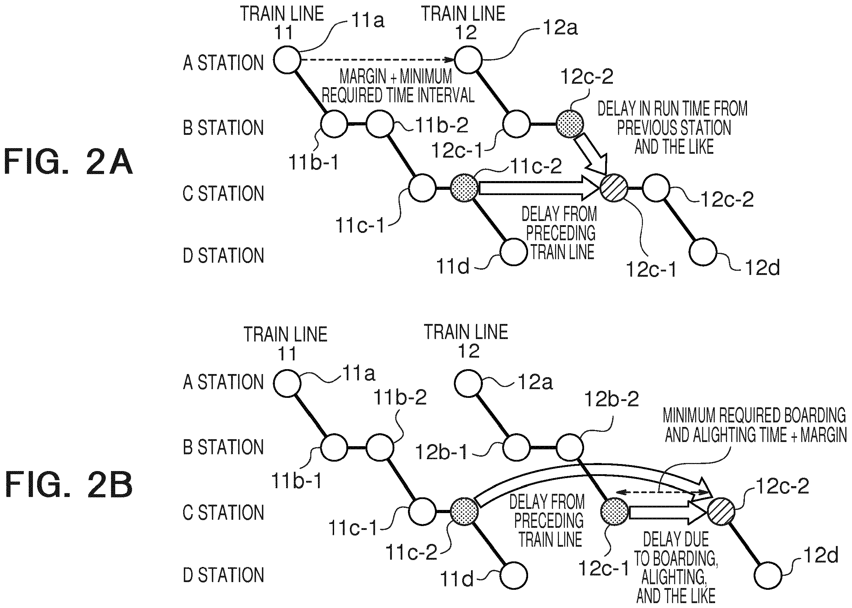

FIGS. 2A and 2B show the outline of the present embodiment. FIG. 2A shows graphs (networks) of a train line 11 of a certain train and a train line 12 of another train. Circles in the diagrams are nodes, which represent events. The train line 11 includes an event 11a of departure from A station, an event 11b-1 of arrival at B station, an event 11b-2 of departure from the B station, an event 11c-1 of arrival at C station, an event 11c-2 of departure from the C station, and an event 11d of arrival at D station (the nodes corresponding to the events are denoted by the same reference signs). A time in a diagram is set on each event. A rightward direction along a plane of the drawing is a time direction. The train line 12 is a train line of another train that trips along the same path as the train line 11 (a train line following the train line 11). The train line 12 includes an event 12a of departure from the A station, an event 12b-1 of arrival at the B station, an event 12b-2 of departure from the B station, an event 12c-1 of arrival at the C station, an event 12c-2 of departure from the C station, and an event 12d of arrival at the D station. It is assumed that only one track exists for each of an inbound line (from the A station toward the D station) and an outbound line (from the D station toward the A station) at each station. Here, an arrival event of the other train at the C station (event 12c-1) will be considered. A delay in the event 12c-1 is influenced on a delay in the first preceding event 12b-2 on the train line 12 (primary delay) and a delay in the event 11c-2 on the preceding train line (train line 11) at the same C station (secondary delay). The delay in the event 12c-1 may be influenced on events at the C station (event 11c-1 and the like) other than the event 11c-2. Specific examples of the primary delay include a delay in a run time from the previous B station and a delay in a dwell time of departure from (departure time at) the preceding B station. Specific examples of the secondary delay include a delay in departure from the C station on the preceding train line 11. A required time interval, which is a time interval to be left, and a margin time are provided between events. In the embodiment, a case is described in which the required time interval is a minimum required time interval which is a minimum time interval to be left. For example, the minimum required time interval or a longer time interval needs to be left between the event 11a-1 and the event 12a-1. As an example, a time interval between the event 11a-1 and the event 12a-1 in the diagram is the minimum required time interval plus the margin time. If a time period from departure of a train from the A station until departure of another train from the A station exceeds the minimum required time interval but is not longer than the minimum required time interval plus the margin time, no delay occurs between the event 11a-1 and the event 12a-1. That is, if a delay time (an excess time interval over the minimum required time interval) between the event 11a-1 and the event 12a-1 is not longer than the margin time, no delay occurs between the events.

Although the description is focused on an arrival event (event 12c-1) in FIG. 2A, the same is true for a departure event. In FIG. 2B, a departure event (event 12c-2) at the C station will be considered. A delay in the event 12c-2 is influenced on a delay in the first preceding event 12c-1 on the train line 12 (primary delay) and a delay in an event on the preceding train line 11 (departure event 11c-1 at the C station) (secondary delay). Specific examples of the primary delay include a delay in arrival at the C station and a delay in dwell time at the C station (a prolonged boarding and alighting time, or the like). A minimum time interval to be left (minimum required time interval) and a margin time are provided between events. For example, the minimum required time interval (a minimum required boarding and alighting time) or a longer time interval is required to be left between the event 12c-2 and the event 12c-1. As an example, a time interval between the event 12c-2 and the event 12c-1 in the diagram is the minimum required time interval plus the margin time. If a time interval from arrival at the C station until departure from the C station exceeds the minimum required time interval but is not longer than the minimum required time interval plus the margin time, no delay occurs between the event 12c-2 and the event 12c-1. That is, if a delay time (an excess time interval over the minimum required time interval) between the two events is not longer than the margin time, no delay occurs between the events.

In the present embodiment, a delay probability distribution for each event is calculated, taking into consideration at least one of such two types of delays (primary delay, secondary delay) and the required time interval required between events (for example, the minimum required time interval). The delay probability distribution for each event is calculated, further taking into consideration the margin time between events. Thus, the delay probability distribution for each event can be calculated rapidly, and therefore the diagram can be evaluated rapidly. Hereinafter, the diagram evaluation apparatus 100 will be described in detail.

The diagram information input unit 110 in FIG. 1 acquires (or receives) diagram information and stores the diagram information in the diagram information storage 210. As an example, the diagram information input unit 110 is an input unit such as a keyboard, a mouse, or a touch panel operated by an operator of the diagram evaluation apparatus 100. In such a case, the diagram evaluation apparatus 100 includes a function for providing an interface screen on which the diagram information is input. The interface screen is displayed on the display 400.

The display 400 is a display device such as an LCD (liquid crystal display), a CRT (cathode ray tube), or a PDP (plasma display) that displays data or information.

The diagram information input unit 110 may be an acquirer that acquires the diagram information from an external apparatus or a storage medium. In such a case, the external apparatus is, as an example, an external server connected to the diagram evaluation apparatus 100 through a wired or wireless communication network. The storage medium is, as an example, a storage medium disposed within the diagram evaluation apparatus 100 or a storage medium externally connected. Examples of the storage medium include a memory device, a hard disk, an SSD, and an optical disk. A trigger for the acquisition of the diagram information may be an instruction from the operator (i.e., a user) of the diagram evaluation apparatus 100, or may be any other condition (for example, it becoming a predetermined time).

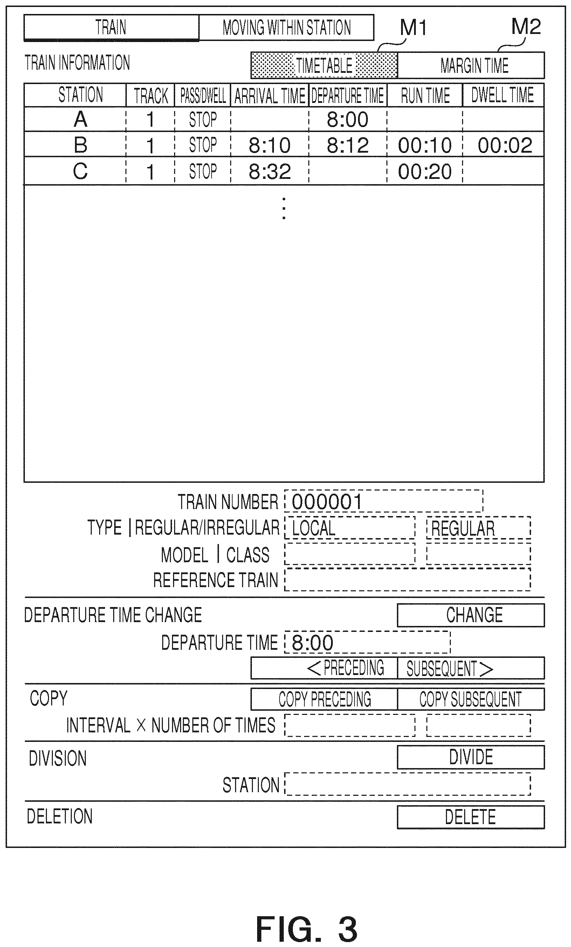

FIG. 3 shows an example of the interface screen (input screen) on which the diagram information is input. The operator can input the diagram information from the screen.

The diagram information is information of a diagram to be evaluated. The diagram represents a series of events such as departure, arrival, and pass in association with times and stop locations (places) with respect to a plurality of vehicles (trains, buses, or the like). The events refer to departure, arrival, pass, and the like. Examples of the stop locations (places) include stations, bus stops, detention spaces, depots, and signal stations. A series of events along a trip path including a plurality of places, with respect to a vehicle, is referred to as a train line or line information. In the following, trains will mainly be assumed as the vehicles. However, the same is true for other kinds of vehicles such as buses, by appropriately replacing words as necessary according to differences between tripping systems. For example, in the description of the specification, a station is replaced with a bus stop, and the like.

FIG. 3 shows an example of the screen on which the train line on a certain train is input. The input screen includes a timetable menu M1 and a margin time menu M2. In the FIG. 3, the screen for the timetable menu M1 is displayed.

The train is operated from A station to C station. The train departs from the A station, dwells at B station, and dwells at the C station. Since the train dwells at the A station, the B station, and the C station, each respective dwell/pass item (indicating whether the train dwells or passes) is set for "dwell". A time point of departure (hereinafter, a departure time) from the A station, a time point of arrival (hereinafter, an arrival time) and a departure time at the B station, and an arrival time at the C station are set. A run time from the A station to the B station (time of duration from the departure time at the A station until the arrival time at the B station) and a dwell time at the B station (time of duration from the arrival time at the B station until the departure time at the B station) are set. It is set that the train dwells at a first track at each station. Each of departure from the A station at 8:00, arrival at the B station at 8:10, departure from the B station at 8:12, arrival at the C station at 8:32, and the like corresponds to one event, and a series of such events corresponds to a train line (or line information).

In a train number item, a train number (here, "000001") can be set. In a type item, it can be set whether the train is local (dwelling at each station) or express. A value ("dwell" or "pass") in the dwell/pass item for each station may be automatically input depending on whether the train is local or express. In a regular/irregular item, it can be set whether the train is operated regularly or irregularly. As an example, in case of "regular", the train line is applied on weekdays, and in case of "irregular", the train line is applied on weekends.

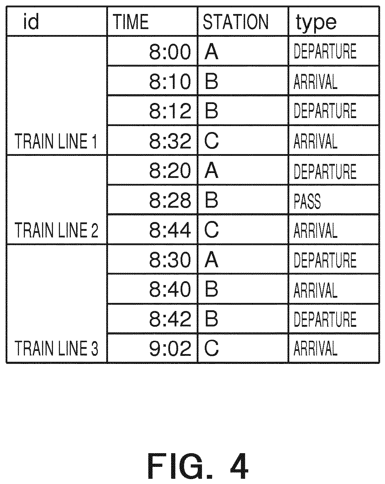

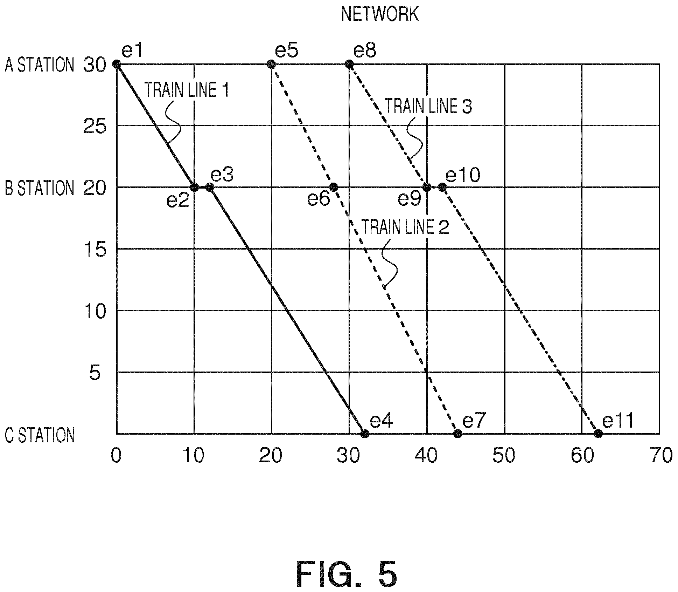

FIG. 4 shows part of the diagram information input from the diagram information input unit 110, in the form of a table. FIG. 5 shows graphs respectively representing each train line in the diagram information in FIG. 4. In more detail, FIG. 5 shows respective network structures of the train lines.

The table in FIG. 4 includes three train lines on mutually different vehicles (trains) tripping from the A station to the C station. As an example, the vehicles correspond to first to n-th vehicles. Three train lines correspond to respective train lines of the first to n-th vehicles. The diagram information includes columns of train line id, time, station, and type of an event. A type is a type of an event indicating departure, arrival, pass, or the like. In the table shown in the diagram, the diagram information includes information for the train line 1 that departs at 8:00, the train line 2 that departs at 8:20, and the train line 3 that departs at 8:30. The train line 1 corresponds to the train line illustrated in FIG. 3. The train line 1 and the train line 3 do not include a pass event because the vehicles dwell at all stations. On the other hand, in the train line 2, since the vehicle passes through the B station, a pass event is set on the B station.

FIG. 5 shows the train lines 1 to 3 included in the diagram information in FIG. 4, each in the form of a graph (network graph). A horizontal axis corresponds to time, and a vertical axis corresponds to distance. The horizontal axis shows relative time, and in the present example, "0" corresponds to 8:00. Each graph (network graph) includes nodes corresponding to events and arcs connecting the nodes. More specifically, the graph of the train line 1 includes nodes e1, e2, e3, and e4 corresponding to chronological events (events 1, 2, 3, and 4, respectively) included in the train line 1, and arcs connecting the nodes. Similarly, the graph of the train line 2 includes node e5, e6, and e7 corresponding to chronological events (events 5, 6, and 7, respectively) included in the train line 2, and arcs connecting the nodes. The graph of the train line 3 includes nodes e8, e9, e10, and e11 corresponding to chronological events (events 8, 9, 10, and 11, respectively) included in the train line 3, and arcs connecting the nodes.

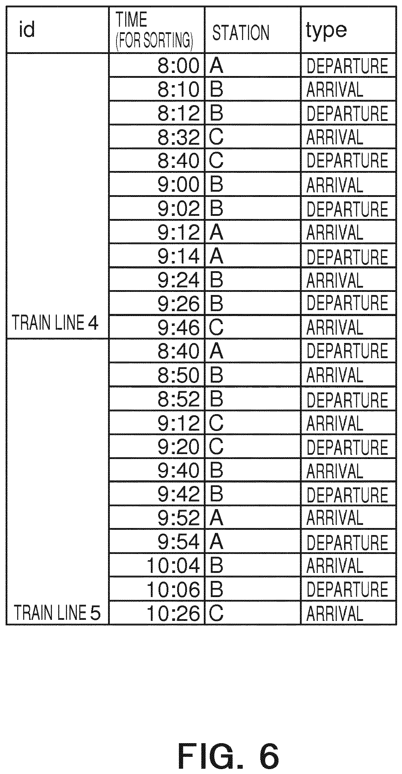

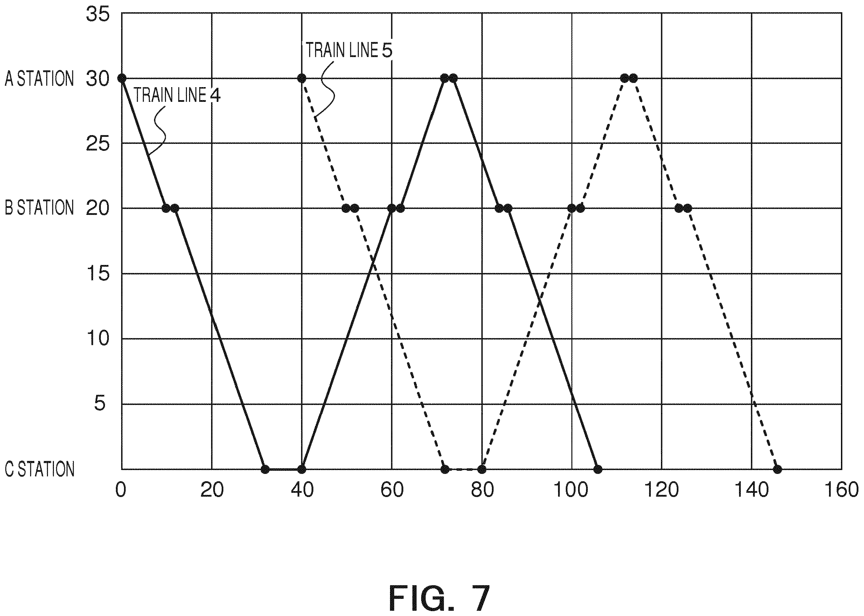

FIG. 6 is a table showing another example of the diagram information, and FIG. 7 shows the diagram information shown in FIG. 6, in the form of graphs (network graphs). The diagram information in FIG. 6 includes information of a train line 4 and a train line 5. Each of the train line 4 and the train line 5 is a train line in case of an operation making one and a half round trip between the A station and the C station. A train line in case of an operation making two or more round trips may also be defined.

In the train lines shown in FIGS. 4 to 7, first departure is from the A station. However, a train line that departs from a midway station (for example, the B station) may be defined. A train line that departs first from the C station may be defined.

The diagram information in the form of a table and in the form of graphs are shown in FIGS. 4 to 7. However, the diagram information may be structured in any other form as long as the form is processable at subsequent stages.

The event-to-event delay time information input unit 120 acquires event-to-event delay time information and stores the event-to-event delay time information in the event-to-event delay time information storage 220. As an example, the event-to-event delay time information input unit 120 is an input unit such as a keyboard, a mouse, or a touch panel operated by the operator. In such a case, the diagram evaluation apparatus 100 includes a function of providing an interface screen on which the event-to-event delay time information is input. The interface screen is displayed on the display 400. The event-to-event delay time information input unit 120 may be an acquirer that acquires the event-to-event delay time information from an external apparatus or a storage medium. In such a case, examples of the external apparatus, the storage medium, and a trigger for an acquisition timing are similar to those in the case of the diagram information input unit 110.

The event-to-event delay time information is an event-to-event delay probability distribution, which is a distribution of delay time between events, or information required to generate an event-to-event delay probability distribution.

Examples of the information include parameters of a probability distribution. The mean, variance, and median of a probability distribution, may be used for the event-to-event delay time information. The event-to-event delay probability distribution is a geometric distribution. Specific examples of the event-to-event delay probability distribution include a distribution of delay in a run time between stations, or a distribution of delay in a dwell time at a station. The run time corresponds to a time duration from a departure time (a time point of a departure event) at a station until an arrival time or a pass time (a time point of an arrival event or a time point of a pass event) at a next station. The dwell time corresponds to time duration from an arrival time (a time point of an arrival event) at a station until a departure time (a time point of a departure event) at the same station.

Expression 1 expresses a probability function for a geometric distribution, where "D(k)" is a probability of the delay time being "k".

[Expression 1]

$$D(k) = (1 - p)^k p \quad (k = 0, 1, 2, \ldots) \quad\quad (1)$$

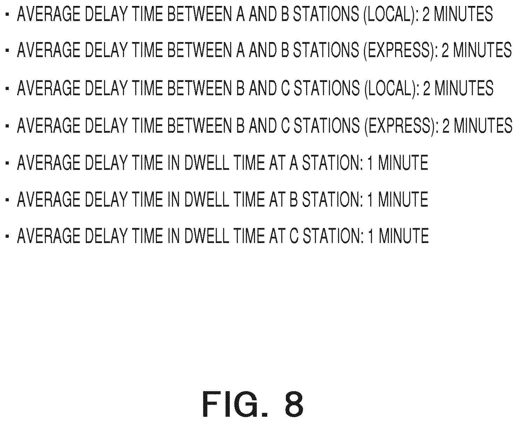

The geometric distribution has only one parameter, "p". Accordingly, a distribution can be determined only by providing one statistical value to the parameter. As examples of statistical values, FIG. 8 shows examples of an average value of delay in the run time between stations and an average value of delay in the dwell time at each station, for each type (local, express, or the like). In the geometric distribution, the distribution can be determined by using such one average value.

The geometric distribution can be determined as "p = 1/(x + 1)" when the average value of delay time is "x". A discrete distribution where the delay time is "k" can be calculated by Expression 1. "k" is a stochastic variable.

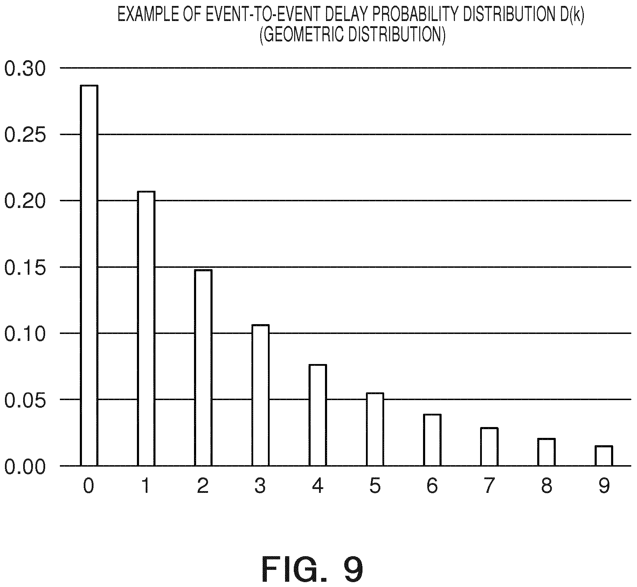

FIG. 9 shows an example illustrating a distribution in case of using a geometric distribution for the event-to-event delay probability distribution. A horizontal axis corresponds to "k" (delay time), and a vertical axis corresponds to "D(k)" (a probability of the delay time being "k"). In the example, the probability function returns a non-negative value first when k = 0. However, the distribution is shifted rightward or leftward and thereby the probability function may return a non-negative value first when "k" is a negative value or a positive value.

Note that since the stochastic variable takes all non-negative integers in an ordinary geometric distribution, the geometric distribution is represented by respective probabilities corresponding to an unlimited number of integers. Accordingly, the equation (1) may be modified so that a limited number of integers are taken by neglecting the region where values of the stochastic variable is too small.

As another example of the distribution of delay time, a negative binomial distribution or the like obtained by generalizing geometric distributions may be used. Different types of distributions may be used for different types of vehicles that run. Different types of distributions may also be used for different time slots (rush hours and non-rush hours, or the like).

If the information required to generate the event-to-event delay probability distribution is input into the event-to-event delay time information input unit 120, the delay probability distribution calculator 500, which will be described later, calculates the event-to-event delay probability distribution from the input information. As an example of an input other than the above-described parameter of a probability distribution, a distribution of run time or a dwell time may be input. In such a case, the delay probability distribution calculator 500, which will be described later, can obtain the event-to-event delay probability distribution by calculating differences from a minimum required time interval, which will be described later and by regarding the calculated differences as delay times.

In processing in the present embodiment, it is assumed that an average value of delay time is input as a parameter, as the information required to generate the event-to-event delay probability distribution. The delay probability distribution calculator 500, which will be described later, generates a geometric distribution (the event-to-event delay probability distribution) based on the parameter and the above-mentioned equation (1).

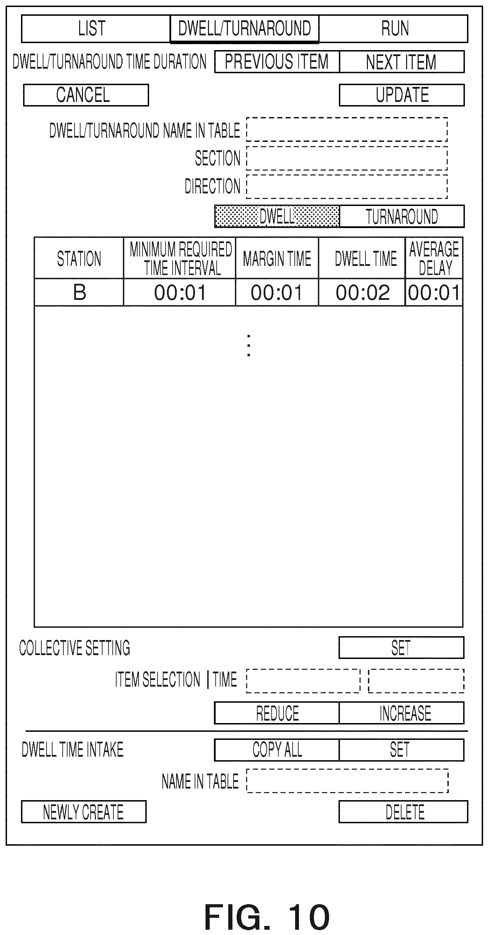

FIGS. 10, 11, and 12 show examples of the screen on which an average value of delay time (average delay time) is input as the information to generate the event-to-event delay probability distribution.

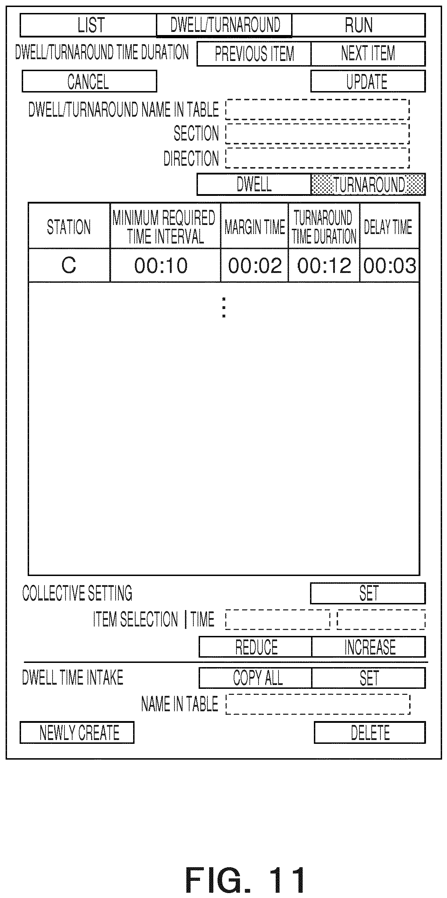

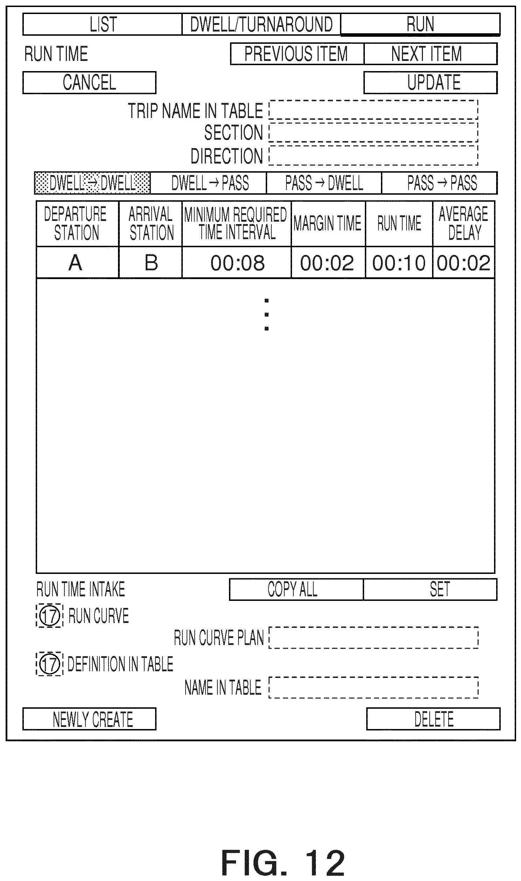

FIG. 10 shows an example in which "one minute (00:01)" is input as an average delay in the dwell time at the B station. In items of minimum required time interval, margin time, and dwell time, a minimum required time interval for dwell time at the B station, a margin time, and a dwell time are stored, respectively. The minimum required time interval and the margin time will be described later. Here, it is assumed that the minimum required time interval, the margin time, and the dwell time have been input beforehand on another screen. However, it is not excluded to input the minimum required time interval, the margin time, and the dwell time on the screen. The same is true in FIGS. 11 and 12 described below. The average delay time is an average of excess time durations over the minimum required time interval. The dwell time can be identified from the diagram information. The dwell time is not shorter than the minimum required time interval and is calculated by the minimum required time interval plus the margin time.

FIG. 11 shows an example in which "three minutes (00:03)" is input as an average delay in turnaround at the C station. A turnaround time duration at the C station is time duration from arrival of a train at the C station until departure of the train from the C station if the train makes a return trip after arriving at the C station. In the minimum required time interval item, the margin time item, and a turnaround time duration item, a minimum required time interval for the turnaround at the C station, a margin time, and a turnaround time duration are stored beforehand, respectively. The average delay time in the turnaround is an average of excess time durations over the minimum required time interval. The turnaround time duration can be identified from the diagram information and is. The turnaround time duration is calculated by the minimum required time interval plus the margin time, as an example.

FIG. 12 shows an example in which "two minutes (00:02)" is input as an average delay in run from the A station to the B station (from departure from the A station until dwell at the B station). In the screen shown in the diagram, a "Dwell → Dwell" tab is selected. In the minimum required time interval item, the margin time item, and a run time item, a minimum required time interval for the run from the A station to the B station, a margin time, and a run time are stored beforehand, respectively. The average delay time is an average of excess time durations over the minimum required time interval. The run time can be identified from the diagram information. The run time is calculated by the minimum required time interval plus the margin time as an example.

If a "Dwell → Pass" tab is selected, an average delay from departure from a certain station until pass through another station can be input. If a "Pass → Dwell" tab is selected, an average delay from pass through a certain station until arrival (dwell) at another station can be input. If a "Pass → Pass" tab is selected, an average delay from pass through a certain station until pass through another station can be input. An average delay time between events other than those recited in FIGS. 10 to 12 may also be input.

The minimum required time interval input unit 130 acquires minimum required time interval information and stores the minimum required time interval information in the minimum required time interval storage 230. As an example, the minimum required time interval input unit 130 is an input unit such as a keyboard, a mouse, or a touch panel operated by the operator. In such a case, the diagram evaluation apparatus 100 includes a function of providing an interface screen on which the minimum required time interval information is input. The interface screen is displayed on the display 400. The minimum required time interval input unit 130 may be an acquirer that acquires the minimum required time interval information from an external apparatus or a storage medium. In such a case, examples of the external apparatus, the storage medium, and a trigger for an acquisition timing are similar to those in the case of the diagram information input unit 110.

The minimum required time interval information is information including a minimum required time interval, which is a minimum time interval to be left between events within a single train line or between events on a plurality of train lines. A restriction by the minimum required time interval will be referred to as a time interval restriction in some cases. Instead of the minimum required time interval information, required time interval information including a required time interval which is a time interval required to be left between events within a single train line or between events on a plurality train lines.

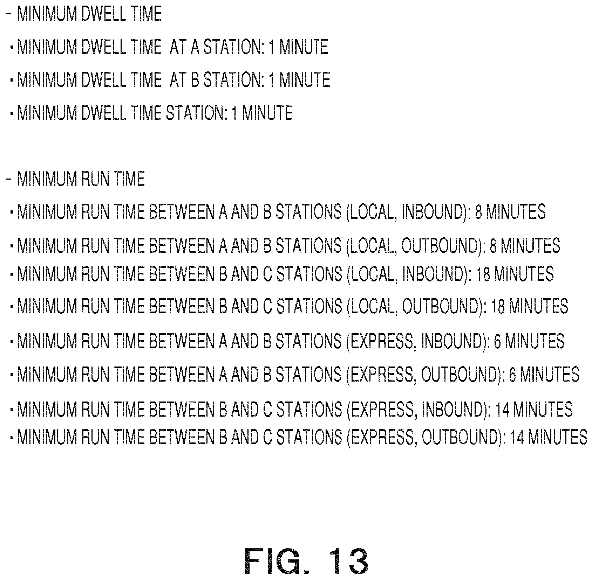

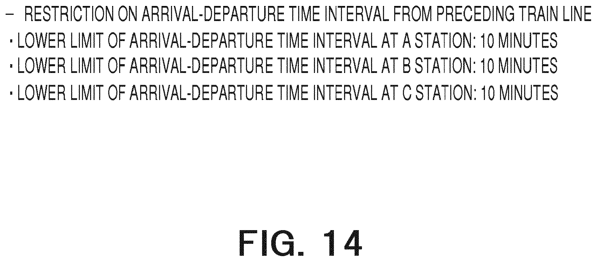

FIGS. 13 and 14 show examples of the minimum required time interval information. FIG. 13 shows examples of a minimum run time between stations and examples of a minimum dwell time at each station. The minimum run time and the minimum dwell time may be defined for each type (local, express, or the like) and for each of inbound and outbound directions. The minimum required time interval may be defined for each train line, or may be defined in common for all train lines. FIG. 14 shows examples of a lower limit value of an arrival-departure time interval at each station, as a restriction between the event and an event on a preceding train line.

An example of the time interval restriction between events on a plurality of train lines will be illustrated. A restriction exists that is a minimum time interval to be left between an arrival time at a certain station (for example, the B station) on a preceding train line and a departure time at a first previous station (for example, the A station) on a self train line. Here, the preceding train line is a train line of a train operated, prior to the self train line, along the same path, or part thereof, as the self train line. It is assumed here that overtaking does not occur between the train operated according to the preceding train line and a train operated according to the self train line. If overtaking occurs, it may be regarded that a relationship between the preceding train line and the self train line is reversed at and after a location where the overtaking occurs or the relationship is reversed at and after a time when the overtaking occurs. The preceding train line may be an immediately preceding train line, or may refer to a plurality of train lines including a train line further preceding the preceding train line. A scope of the preceding train line may be defined arbitrarily.

Other various types of time interval can be considered. For example, if a station has a plurality of tracks, there are an arrival-arrival time interval and a departure-departure time interval between different tracks. If a turnaround is made at a station, there is a time interval related to the turnaround (if a turnaround is made, a restriction between events before and after the turnaround; for example, a time interval from arrival at the station until departure for a return trip, or the like). Different values of the time interval restriction may be provided for different types of vehicles or different time slots for tripping (rush hours and non-rush hours, or the like). For example, during rush hours, the value of the restriction may be set larger or smaller than during non-rush hours. If overtaking (a certain vehicle overtaking another vehicle) or a wait occurs, the value of the time interval restriction may be made different from a value when no overtaking or wait occurs. Time interval restrictions may also be set between an arrival time and a pass time and between a departure time and a pass time.

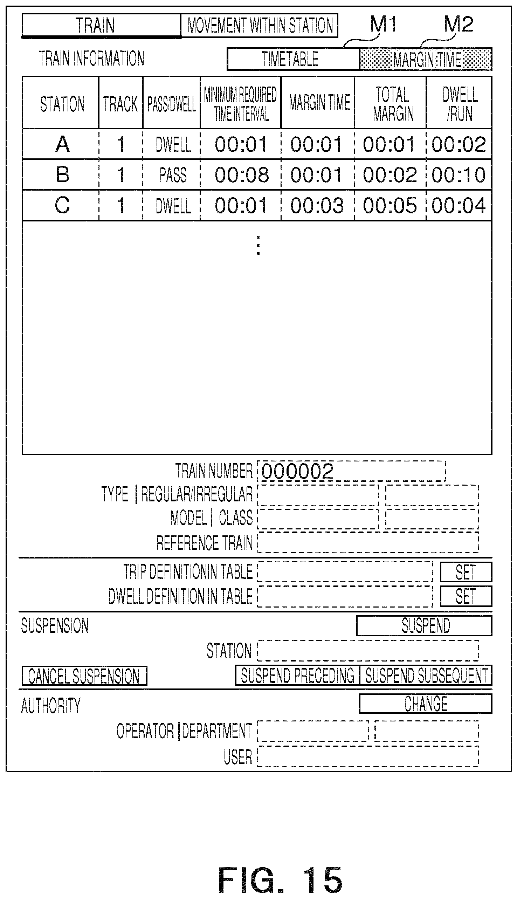

FIG. 15 shows an example of the screen on which the minimum required time interval and the like are input for line information on a certain train. The screen in FIG. 15 is displayed by opening the margin time menu M2 on an input screen similar to the input screen shown in FIG. 3. Note that the screen is a screen concerning a different train line (a different train) from the train line on the screen in FIG. 3. A description of the same items as the items described in the timetable menu M1 in FIG. 3 will be omitted.

The minimum required time interval can be set in the margin time menu M2. In a minimum required time interval item, a minimum required time interval is set. Note that in a dwell/run item, a dwell time or a run time identified from the diagram information is set. In a margin time item, a margin time is set. In a total margin item, a total margin time is set. A difference between the dwell time or the run time and the minimum required time interval corresponds to the margin time. The margin time may be manually input by the operator. The margin time may be calculated based on the diagram information and the minimum required time interval and the calculated margin time automatically input on the screen. In the processing in the present embodiment, the margin time is calculated based on the diagram information and the minimum required time interval, which will be described later, and therefore the margin time set on the input screen is not used; however, the processing can be changed so that the margin time set on the input screen is used.

In the example shown in the diagram, the minimum required time interval at the A station is set to one minute (00:01). The minimum required time interval before a train passes through the B station is set to eight minutes (00:08). The minimum required time interval with respect to the C station is set to one minute (00:01).

The minimum required time interval input unit 130 may input information required to acquire the minimum required time interval information, not inputting the minimum required time interval information. In this case, the delay probability distribution calculator 500 calculates the minimum required time interval information based on the input information and other additional information. For example, the minimum required time interval input unit 130 inputs information on the margin time between stations or the like. The delay probability distribution calculator 500 can obtain the minimum required time interval by calculating a difference between a time difference in the diagram information (factoring in a margin time) and a margin time indicated by the input information. The minimum required time interval may also be calculated based on a distance between stations, a maximum velocity of each vehicle or an acceleration performance of each vehicle, or the like.

The delay probability distribution calculator 500 in FIG. 1 includes an event information generator 510, an evaluation order determiner 515, and a delay probability evaluator 520. The delay probability evaluator 520 includes a convolution calculator 521, a margin shifter 522, a combined probability calculator 523, and a round-up processor 524.

The delay probability distribution calculator 500 reads the diagram information from the diagram information storage 210, the average value of delay time (information to generate the event-to-event delay probability distribution) from the event-to-event delay time information storage 220, and the minimum required time interval information from the minimum required time interval storage 230, and calculates the event delay probability distribution. The event delay probability distribution is, for example, a probability distribution of delay time (delay probability distribution) with respect to the event such as arrival, departure, or pass at each station. As an example, the event delay probability distribution corresponds to a first delay probability distribution according to the present embodiment. The delay probability distribution calculator 500 stores the generated event delay probability distribution in the event delay probability distribution storage 300. The display 400 displays the event delay probability distribution stored in the storage 300.

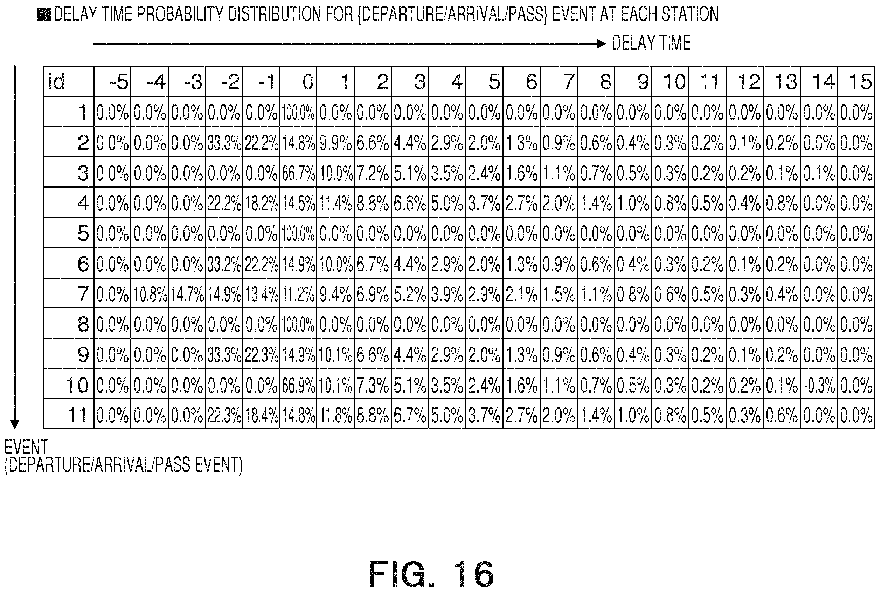

FIG. 16 shows an example of event delay probability distributions generated by the delay probability distribution calculator 500. A vertical axis corresponds to identifies (ids) of events, and a horizontal axis corresponds to delay times. An event x is an event whose id is "x". Time is separated into one-minute units, but may be separated into other units such as five-minute units.

Events 1 to 4 are events belonging to the train line 1 in FIG. 4, and the event 1 represents departure from the A station, the event 2, arrival at the B station, the event 3, departure from the B station, and the event 4, arrival at the C station. Events 5 to 7 are events belonging to the train line 2 in FIG. 4, and the event 5 represents departure from the A station, the event 6, pass through the B station, and the event 7, arrival at the C station. Events 8 to 11 are events belonging to the train line 3 in FIG. 4, and the event 8 represents departure from the A station, the event 9, arrival at the B station, the event 10, departure from the B station, and the event 11, arrival at the C station.

In the event 1, the probability of the delay time being 0 is 100%, with respect to departure of a vehicle of the train line 1 from the A station. That is, the probability that the vehicle of the train line 1 departs from the A station without delay is 100%.

In the event 2, probabilities larger than 0 are distributed over a range of delay times of -2 to 13, with respect to arrival of the vehicle of the train line 1 at the B station. For example, with respect to the vehicle of the train line 1, the probability of delay in arrival at the B station is 14.8% for a delay time of 0, 9.9% for a delay time of 1, and 22.2% for a delay time of -1. A delay time of -1 means one minute early arrival at the B station.

In the event 6, with respect to a vehicle of the train line 2, the probability of a delay time of 0 in the pass time at the B station is 10.0%, and the probability of a delay time of -1 is 22.2%. A delay time of -1 means one minute early pass though the B station.

In the departure-related events 1, 3, 5, 8, and 10, all probabilities for negative-valued delay times are 0%. That is, the probability of early departure, which means that a vehicle departs earlier than a departure time, is 0%. Hereinafter, early arrival, early pass, and early departure will collectively be referred to as early departure and the like in some cases.

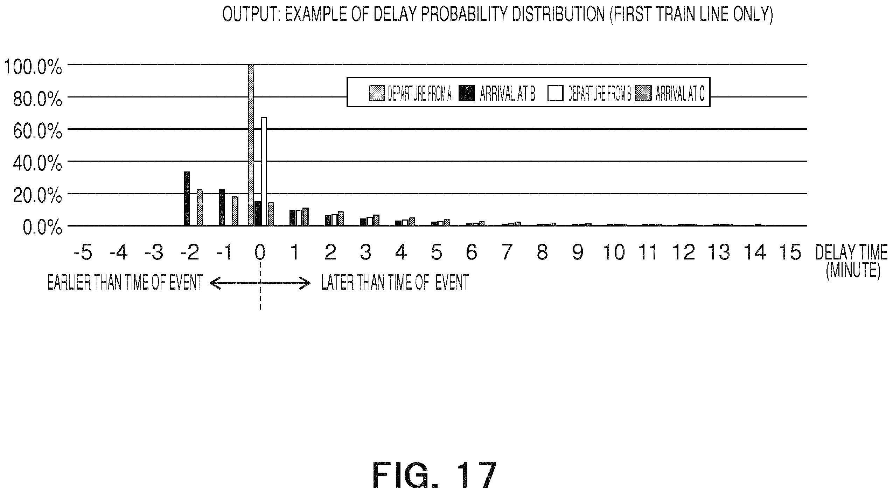

FIG. 17 shows the probability distributions for the events 1 to 4 belonging to the train line 1 (the first train line) in FIG. 16, in the form of graphs. Similar graphs may be created for the other train lines 2 to 4. The operator may designate a train line for which graphs are generated, and the graphs may be created only for the designated train line.

The created graphs may be displayed on the display 400 to allow the operator to check. The operator can intuitively evaluate the diagram information by checking the graphs. The event delay probability distributions in the form of a table (see FIG. 16) may be displayed on the display 400. Thus, the operator can also collectively check the delay probability distributions for the events on each train line and evaluate the diagram information.

Hereinafter, a detailed description will be given of processing in which the delay probability distribution calculator 500 generates such event delay probability distributions.

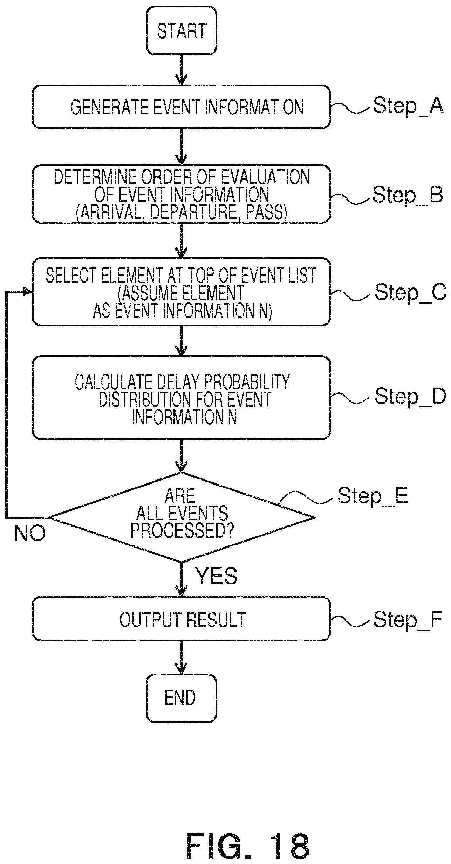

FIG. 18 is a flowchart showing an outline of the processing in which the delay probability distribution calculator 500 generates the event delay probability distributions.

The event information generator 510 generates event information based on the diagram information and average values of delay time, and stores the generated event information in the event information storage 240 (Step_A). As an example, the event information includes an identifier of a train line, an identifier of a vehicle, identifiers of events (departure, arrival, pass, and the like), information on times and places (stations or the like), the average delay times (the average values of delay time), minimum required time intervals, and the like.

The evaluation order determiner 515 sorts the event information in chronological order (in order from an earliest time to a latest time) (Step_B). A string of the sorted event information is referred to as an event list.

The delay probability evaluator 520 repeats processing for sequentially reading out the event information (assumed to be "N") from a top of the event list (Step_C) and processing for calculating a delay probability distribution for the read event information N (Step_D) (NO in Step_E). When all the event information stored in the event list has been processed (YES in Step_E), the processing in the present flowchart is terminated. Thus, the delay probability distribution is generated for each event and stored in the event delay probability distribution storage 300.

(Details of Step_A)

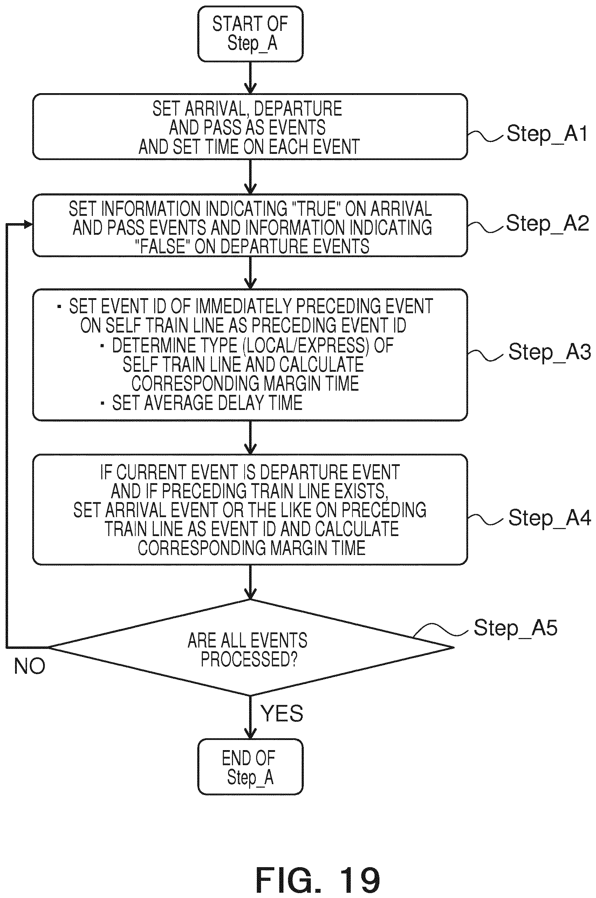

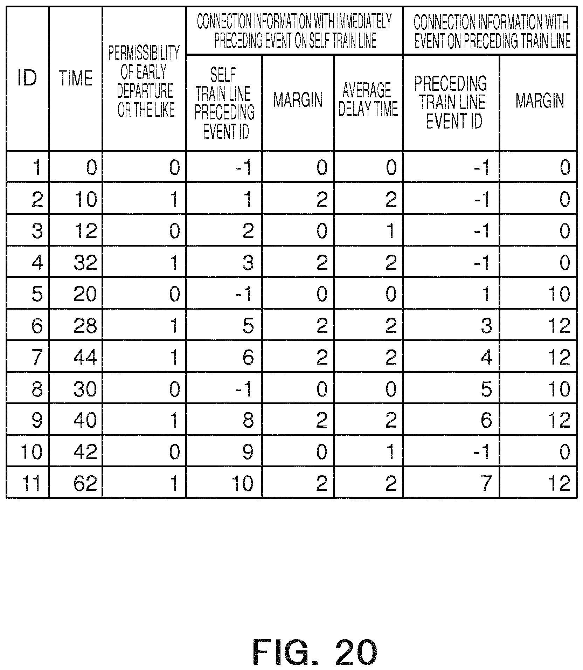

FIG. 19 shows a detailed flowchart of Step_A in FIG. 18. FIG. 20 shows an example of the event information generated through the processing in Step_A in the form of a table. FIG. 20 corresponds to the examples shown in FIGS. 4 and 5. The processing in the flowchart in FIG. 19 will be described with reference to FIG. 20.

In Step_A1, arrival, departure, and pass on each train line in the diagram information are set as events. Moreover, a time is set on each event based on the diagram information. The identifiers (IDs) of the events 1 to 11 and the respective times of the events are set in the table in FIG. 20. Other items in the table are set through processing described below.

Each of the set events is selected in turn (in chronological order), and Steps A2 to A4 described below are repeatedly performed on the selected event as a target event. Note that although arrival at, departure from, and pass through a station are regarded as events here, an event may be set in a unit other than a station, for example, in a unit of a closed section.

In Step_A2, it is determined, depending on a type of the target event, whether or not early departure or the like (early departure, early arrival, or early pass) is permissible to the target event, and permissibility information indicating a determined result is set on the target event. As an example, "True" is set when the permissibility information is "permissible", and "False" is set when the permissibility information is "not permissible", but such settings are not restrictive. Early arrival means that a train arrives earlier than a time of an arrival event. Early pass means that a train passes earlier than a time of a pass event. Early departure means that a train departs earlier than a time of a departure event. In the present embodiment, it is determined that early arrival and early pass are permissible and that early departure is not permissible. It is determined here that only early departure is not permissible, but such determinations are not restrictive. When the target event is the event 1, the event 1 is a departure event, and since early departure is not permissible, "False" is set as the permissibility information.

In Step_A3, connection information of connection between the target event and an event immediately preceding the target event on the self train line (a train line to which the target event belongs) is generated. The connection information includes an ID of the event preceding the target event on the self train line (self train line preceding event ID), a margin time from the preceding event, and the average delay time of the target event. Hereinafter, generation of the connection information will be described in detail.

If the target event is a first event on the self train line (for example, in case of the event 1 in FIG. 20), "-1" is set as the self train line preceding event ID. In other cases, the event ID of an event immediately preceding the target event on the self train line is set as the self train line preceding event ID. For example, since an event immediately preceding the event 2 on the train line 1 is the event 1, "1" is set as the self train line preceding event ID for the event 2.

A type (here, local/express) of the self train line is determined, and based on a result of the determination, the margin time from the immediately preceding event is calculated. For example, the margin time is calculated as follows:

$$\text{Margin time} = \text{(time difference between the target event}$$
$$\text{and the immediately preceding event in the diagram information)}$$
$$- \text{(minimum required time interval between the target event and}$$
$$\text{the immediately preceding event)}.$$

For example, for the margin time of the event 2, 2 is obtained by subtracting the minimum required time interval between the event 2 and the event 1 from a time difference between the event 2 and the event 1 in the diagram information. Although the margin time is obtained through calculation here, the margin time may be input on the above-described input screen, and the input information may be acquired. The minimum required time interval can be specified by the minimum required time interval information, depending on a type of the self train line.

Further, an average value of delay time (average delay time) between the target event and the preceding event on the self train line is set. In the example shown in the diagram, for the event 2, 2 is set as the average delay time between the event 2 and the event 1.

In Step_A4, for the target event, connection information of connection between the target event and a preceding event on the preceding train line is generated. The connection information includes an ID of the preceding event on the preceding train line (preceding train line event ID) and the margin time from the preceding event on the preceding train line.

If the target event is a departure event and if a preceding train line exists, an arrival event, a pass event, or a departure event at the same station as the station of the departure event is identified from the preceding train line, and the identified event is set as the preceding train line event ID. For example, if the target event is the event 10 on the train line 3, the event 10 is a departure event, and the preceding train line 2 exists as a train line preceding the train line 3. Accordingly, the event 6, which is a pass event at the same station as the station (B station) of the event 10, is identified from the preceding train line 2. Although the event at the same station on the preceding train line is set as the preceding event here, such a setting is not restrictive. For example, an event at a station that is passed through prior to the same station may be set as the preceding event (the same is true hereinafter).

If the target event is an arrival event and if a preceding train line exists, a departure event, a pass event, or an arrival event at the same station as the station of the arrival event is identified from the preceding train line, and the identified event is set as the preceding train line event ID. For example, if the target event is event 7 on the train line 2, the event 7 is an arrival event, and the preceding train line 1 exists as a train line preceding the train line 2. Accordingly, the event 4, which is a departure event at the same station as the station (C station) of the event 7, is identified from the preceding train line 1.

If the target event is a pass event and if a preceding train line exists, a departure event, a pass event, or an arrival event at the same station as the station of the pass event is identified from the preceding train line, and the identified event is set as the preceding train line event ID. For example, if the target event is the event 6 on the train line 2, the event 6 is a pass event, and the preceding train line 1 exists as a train line preceding the train line 2. Accordingly, the event 3, which is an arrival event at the same station as the station (B station) of the event 6, is identified from the preceding train line 1.

Note that since a train line preceding the train line 1 does not exist, all of the respective preceding train line event IDs for the events included in the train line 1 are set to a predetermined value (here, "-1").

The preceding train line event IDs are set for departure, arrival, and pass events on a train line that has the preceding train line. However, the preceding train line event IDs may be set for only one or two of arrival, departure, and pass. For example, the preceding train line event IDs may be set only for departure events. The preceding train line may be an immediately preceding train line only, or a plurality of train lines may be specified as preceding train lines.

When a preceding train line event ID of a value other than "-1" is set for the target event, the margin time allowable between the target event and the preceding event on the preceding train line is calculated. For example, the margin time is calculated as follows:

Margin time = (time difference between the target event and the preceding event on the preceding train line in the diagram information) - (minimum required time interval between the target event and the preceding event on the preceding train line).

Thus, the event information on the target event is generated. When the processing in Step_A2 to Step_A4 is completed for each event set in Step_A1 (Step_A5), the event information on all events is generated and stored in the event information storage 240. Thus, the processing in the present flowchart is terminated.

(Regarding Step_B and Step_C)

In the processing in Step_B in FIG. 18, the evaluation order determiner 515 performs topological sorting of the event information. The topological sorting is such processing that any event always comes after an event (preceding event) having an earlier time than the any event. That is, the topological sorting is processing to guarantee that when each event information is processed in turn in Step_C and Step_D, event information on all preceding events has been already processed before the current event information is processed.

As the specific processing in Step_B, the evaluation order determiner 515 only sorts the event information in chronological order (in order of time in the table in FIG. 20). In Step_C, the delay probability evaluator 520 only reads out the event information in the sorted order. Accordingly, a further description will be omitted.

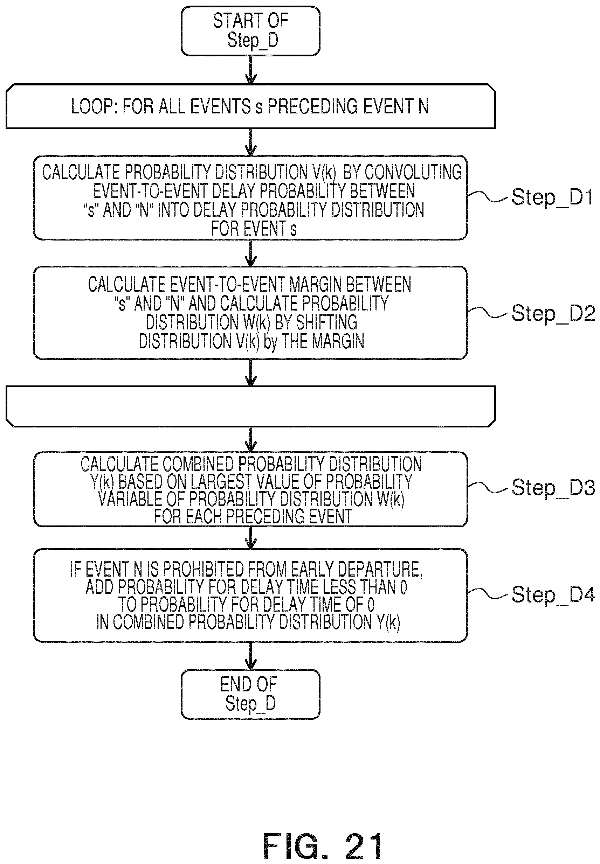

FIG. 21 is a detailed flowchart of Step_D in FIG. 18. A description will be given of processing for calculating an event delay probability distribution for the event information read out of the event list in Step_C (referred to as the event information N). An event indicated by the event information N will be stated as the event N. As an example, the event N corresponds to a first event according to the present embodiment.

Note that for the probability distribution in each step described below, a discrete probability distribution whose domain is divided into a plurality of parts is assumed. The domain may include a negative-value part. Here, as an example, a discrete distribution in one-minute units with a range from -5 minutes to 15 minutes will mainly be considered. The range from -5 minutes to 15 minutes corresponds to a range of five minutes early arrival to a delay of 15 minutes.

First, an outline of the flow in FIG. 21 will be described. First, all events s preceding the event N are identified. As an example, each event s corresponds to a second event according to the present embodiment. For each event s, the convolution calculator 521 performs delay probability convolution processing (Step_D1), and the margin shifter 522 performs margin shift processing (Step_D2). Thus, probability distributions of delay time in the event N that are reached via the individual events s, respectively, (delay probability distributions W(k)) are obtained. Further, the combined probability calculator 523 combines the probability distributions to obtain a combined probability distribution Y(k) (Step_D3). Lastly, if the event N is prohibited from taking place earlier than the time of the event N, the round-up processor 524 performs round-up processing on the combined probability distribution (Step_D4). For example, if the event N is a departure event and early departure is prohibited, the round-up processing is performed.

If the number of the events s (second events) preceding the event N (first event) is one, performing of Step_D3 is omitted. If the event N is permitted to take place earlier than the time of the event N, performing of Step_D4 is omitted. In the present embodiment, it is assumed that only departure events are prohibited from taking place earlier than the times thereof (that is, early departure is prohibited), and that arrival events and pass events are not prohibited from taking place earlier than the times thereof (early arrival and early pass).

Hereinafter, each step in FIG. 21 will be described in detail.

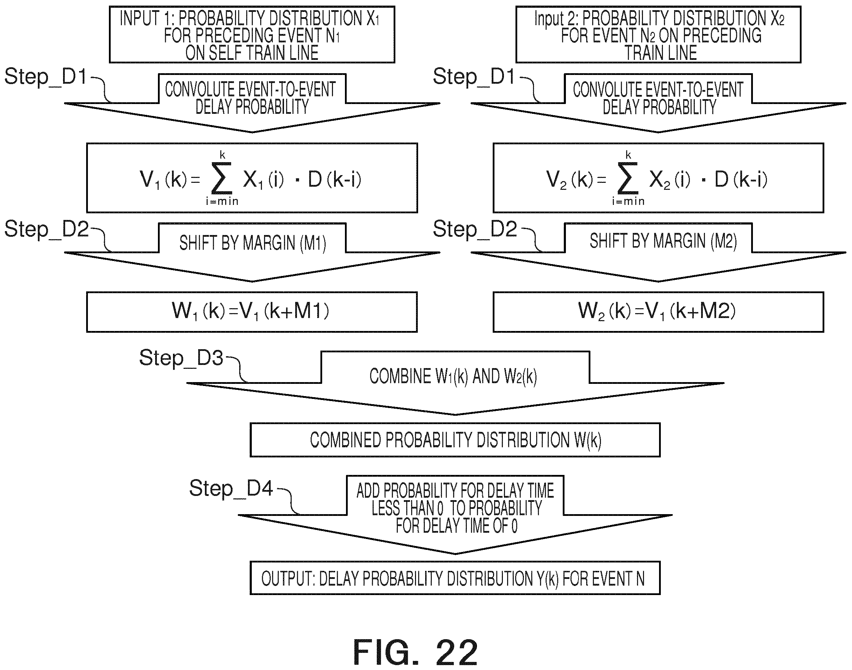

FIG. 22 shows an outline of the processing in Step_D when two events preceding the event N exist: a preceding event s (assumed to be N1) on the self train line and a preceding event s (assumed to be N2) on the preceding train line. As an example, if the event N is the event 6, the event N1 is the event 5 and the event N2 is the event 3.

In Step_D1, if a delay probability distribution (event delay probability distribution) for the preceding event N1 on the self train line is Xi(i), and an event-to-event delay probability distribution between the event N1 (second event) and the event N (first event) is D(k), the convolution processing on the distributions is performed through calculation using an equation provided below. Thus, a delay probability distribution $V_1(k)$ for the event N is obtained. As an example, $V_1(k)$ corresponds to a first probability distribution according to the present embodiment. As an example, $X_1(i)$ corresponds to a second event delay probability distribution according to the present embodiment. As an example, the event N corresponds to the first event according to the present embodiment. As an example, the event N1 corresponds to the second event according to the present embodiment.

[Expression 2]

$$V_1(k) = \sum_{i=\min}^{k} X_1(i) \cdot D(k-i) \qquad (2)$$

$X_1(i)$ represents a probability that the delay time in the preceding event N1 is "i". For example, $X_1(-1)$ represents a probability that the delay time in the preceding event N1 is -1, $X_1(0)$ represents a probability that the delay time in the preceding event N1 is 0, $X_1(1)$ represents a probability that the delay time in the preceding event N1 is 1, and Xi(2) represents a probability that the delay time in the preceding event N1 is 2.

D(k - i) represents a probability that the delay time between the preceding event N1 and the event N is "k - i". For example, D(0) represents a probability that the delay time between the preceding event N1 and the event N is 0, D(1) represents a probability that the delay time between the preceding event N1 and the event N is 1, and D(2) represents a probability that the delay time between the preceding event N1 and the event N is 2.

$V_1(k)$ represents a probability that the delay time in the event N is "k". For example, $V_1(-1)$ represents a probability that the delay time in the event N is -1, $V_1(1)$ represents a probability that the delay time in the event N is 1, and $V_1(2)$ represents a probability that the delay time in the event N is 2.

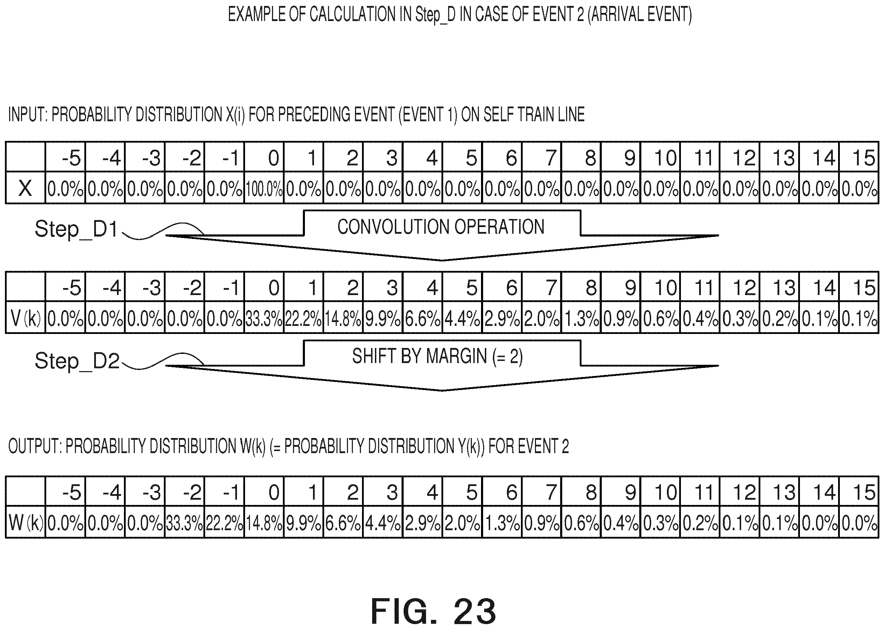

FIG. 23 shows a specific example of Step_D. Here, a case is shown where the event N is the event 2 (arrival event). An event preceding the event 2 is the event 1. No train line preceding the self train line (train line 1) exists. The delay probability distribution (Xi(i)) for the preceding event 1 on the self train line is shown at a top of FIG. 23 (same as the uppermost row of the table in FIG. 16). If an event (here, the event 1) has no preceding event, a predetermined initial distribution is given as the delay probability distribution for the event. An example of the initial distribution is a distribution indicating that no delay occurs (the delay time is 0 with a probability of 1 (100%)). The uppermost row of the table in FIG. 16 corresponds to such a case.

It is assumed that the event-to-event delay probability distribution between the event 2 and the event 1 is the equation (1): D(k) = (1 - p)$^k$p, where p = 1/(x + 1). "x" is an average value of delay time between the event 2 and the event 1. The value of "x" is 2, identified from a row of "ID = 2" of the table in FIG. 20. Accordingly, p = 1/(2 + 1) = 1/3. Accordingly, the calculation of the equation (2) results in the following equations.

[Expression 3]

$$V_1(0) = \sum_{i=-5}^{0} X_1(i) \cdot D(0-i) = X_1(0) \cdot D(0-0) = 1 \cdot \frac{1}{3} = 0.333$$

$$V_1(1) = \sum_{i=-5}^{1} X_1(i) \cdot D(1-i) = X_1(0) \cdot D(1) = 1 \cdot \frac{2}{9} = 0.222$$

$$V_1(2) = \sum_{i=-5}^{2} X_1(i) \cdot D(2-i) = X_1(0) \cdot D(2) = 1 \cdot \frac{4}{27} = 0.148$$

$$V_1(3) = \sum_{i=-5}^{3} X_1(i) \cdot D(3-i) = X_1(0) \cdot D(3) = 1 \cdot \frac{2}{9} = 0.222$$

Note that when i = 0, $X_1(0)$ = 1 (100%), and otherwise, Xi(i) results in 0 (see the table at the top of FIG. 23). When "k = 0, 1, 2, 3" and "p = 1/3" are substituted into "D(k) = (1 - p)$^k$p", resultants are "D(0) = 1/3", "D(1) = 0.222", "D(2) = 0.148", and "D(3) = 0.088".

Although calculation in case of "k = 0, 1, 2, 3" is performed here, calculation can be similarly performed in case of "k = -5 to -1, 4 to 15". Thus, the delay probability distribution Vi(k) for the event N in case of "k = -5 to 15" is calculated.

An example of the calculated delay probability distribution is shown in the middle of FIG. 23.

In Step_D2, assuming that the margin time is "Margin" or "M", margin shift processing for shifting the probability distribution Vi(k) calculated in Step_D1 based on the margin time is performed. An equation used in the margin shift processing is shown below. Thus, a probability distribution Wi(k) subjected to margin shift is obtained. As an example, the probability distribution Wi(k) subjected to margin shift corresponds to the first probability distribution shifted based on the margin time according to the present embodiment. The value of "Margin" is determined depending on the preceding event (see FIG. 20). In FIG. 22, the margin time from the preceding event N1 is stated as "M1", and the margin time from the preceding event N2 is stated as "M2".

[Expression 4]

$$W_1(k) = V_1(k + Margin) \qquad (3)$$

An example where margin shift is performed on the probability distribution Vi(k) shown in the middle of FIG. 23 will be illustrated. Since "Margin" is 2, $W_1(1) = V_1(1 + 2) = V_1(3) = 0.099$ (9.9%). That is, the value of "$V_1(3) = 0.099$ (9.9%)" is shifted to a time that is a time of "Margin" (2 minutes) earlier.

Similarly, the following are calculated: $W_1(0) = V_1(0 + 2) = V_1(2) = 0.148$ (14.8%); $W_1(-1) = V_1(-1 + 2) = V_1(1) = 0.222$ (22.2%); and $W_1(-2) = V_1(-2 + 2) = V_1(0) = 0.333$ (33.2%). A reason why margin shift is performed in such a manner is that a delay within a limit of "Margin" is allowable. The resultant probability distribution $W_1(k)$ obtained by performing the margin shift of $V_1(k)$ in FIG. 23 is shown at the bottom of FIG. 23.

Note that Step_D3 and Step_D4 are omitted because the number of events preceding the event 2 is one (only the preceding event on the self train line) and the preceding event is an arrival event (not a departure event). Accordingly, the probability distribution W(k) shown at the bottom of FIG. 23 is output as the event delay probability distribution Y(k) for the event 2.

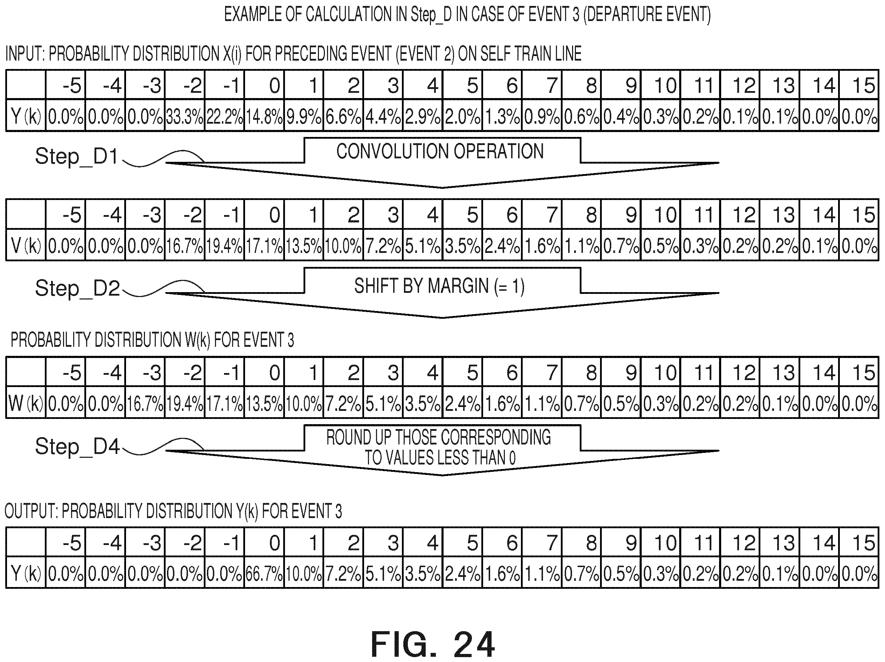

FIG. 24 shows another specific example of Step_D. An example where the event N is the event 3 (departure event) is shown here. The event N1 preceding the event 3 is the event 2. No train line preceding the self train line (train line 1) exists. The delay probability distribution (Xi(i)) for the preceding event 2 on the self train line is shown at the top of FIG. 24. The delay probability distribution (Xi(i)) for the preceding event 2 corresponds to the event delay probability distribution Y(k) obtained in Step_D for the event 2 (same as the table at the bottom of FIG. 23).

In Step_D1 in FIG. 24, a convolution operation of the delay probability distribution Xi(i) (= Y(k)) for the preceding event 2 and the event-to-event delay probability distribution Di(k) between the event 3 and the event 2 is performed according to the equation (2). Thus, the delay probability distribution Vi(k) for the event N is obtained. The obtained probability distribution $V_1(k)$ is shown in a second table from the top of FIG. 24. Details of the convolution operation are described earlier and therefore omitted.

In Step_D2, margin shift processing is performed on the probability distribution Vi(k) calculated in Step_D1 according to the equation (3), whereby the probability distribution Wi(k) subjected to margin shift is obtained. The value of "Margin" of the event 3 from the event 2 is 0 (see FIG. 20). The probability distribution $W_1(k)$ subjected to margin shift is shown in a third table from the top of FIG. 24. Details of the margin shift processing are described earlier and therefore omitted. Processing in Step_D4 in FIG. 24 will be described later.

Next in Step_D3 in FIG. 22, if two or more events preceding the event N exist, that is, if delays are influenced (or rippled) from the two or more events to the event N, a combined probability distribution Z(k) is generated by combining $W_1(k)$ calculated for each preceding event i. More specifically, for example, if preceding events 1 to h ("h" is an integer larger than 2) exist, combinations of values of "k" (stochastic variable) among the preceding events 1 to h are generated. If the number of the preceding events is "h" and the number of possible values of "k" is "g", "h × g" combinations are obtained. For each combination, a product of Wi(k) to $W_h(k)$ is calculated and a largest one of the values of "k" is selected, whereby sets of the value of "k" and the product are obtained. The obtained set are classified based on the values of "k", and a plurality of groups as many as the number of the values of "k" are obtained. The sets including a same value of "k" belong to each group. A total sum of the products included in the set is calculated for each set, and the value of the total sum is obtained as a delay probability (combined probability) for the value of "k" corresponding to the group. Thus, the respective delay probabilities (combined probabilities) for the values of "k" are obtained as a combined probability distribution.

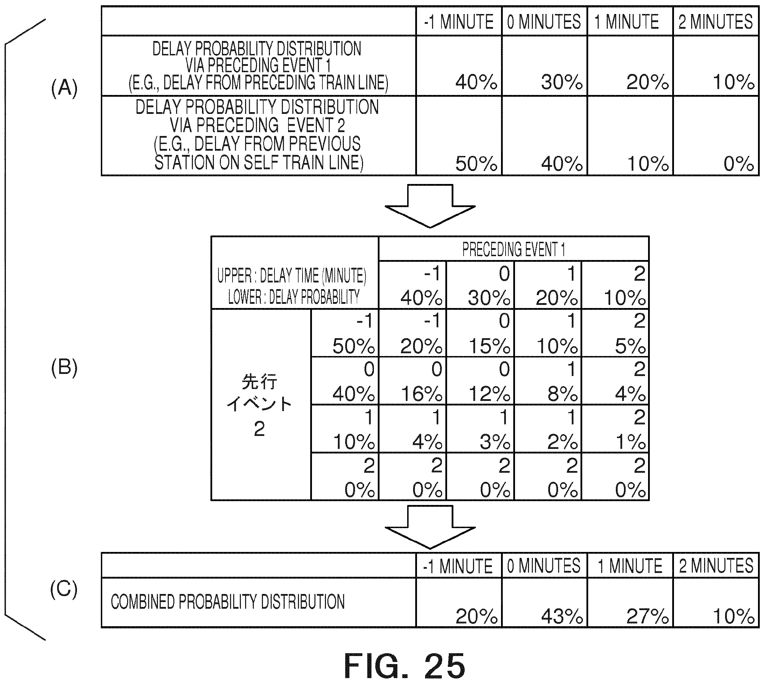

A specific example of the processing for generating the combined probability distribution in Step_D will be described using FIGS. 25(A) to 25(C). For simplicity, it is assumed that "k" takes discrete values in one-minute units in a range of -1 to 2. The number "h" of preceding events is assumed to be 2. The preceding events are assumed to be a preceding event 1 and a preceding event 2.

FIG. 25(A) shows the probability distribution Wi(k) for the preceding event 1 and the probability distribution $W_2(k)$ for the preceding event 2 individually.

FIG. 25(B) shows a table in which the values of "k" for the preceding event 1 are shown as items horizontally, and the values of "k" for the preceding event 2 are shown as items vertically. In an upper side in each cell of the table, a largest one of the value of "k" for the preceding event 1 and the value of "k" for the preceding event 2 (if the values are the same, any one of the values) is stored. In a lower side in each cell, a product of "$W_1(k)$" for the corresponding value of "k" for the preceding event 1 and "$W_2(k)$" for the corresponding value of "k" for the preceding event 2 is stored. The product corresponds to an occurrence probability if the preceding event 1 and the preceding event 2 are independent of each other.

For example, in case of an uppermost right cell of the table, the value of "k" for the preceding event 1 is 2, and the value of "k" for the preceding event 2 is -1. Accordingly, "2", which is a larger one of 2 and -1, is stored. Moreover, the delay probability Wi(2) for the preceding event 1 when the value of "k" is 2 is 10%, and the delay probability $W_2(-1)$ for the preceding event 2 when the value of "k" is -1 is 50%. Accordingly, a product of the delay probabilities is obtained as "10% × 50% = 5%". Accordingly, 5% is stored in the cell. In other cells, a largest one of the values of "k" and a product are stored similarly.

The cells of the table in FIG. 25(B) are classified into groups of cells, each including a same value (largest value) of "k", and a total sum of the products included in the cells is calculated for each group. Thus, a delay probability is obtained for each value of "k".

FIG. 25(C) shows a table in which the total sum is calculated and stored for each value of "k". For example, an example where the total sum is calculated when "k" is 2 will be illustrated. First, cells including "2" are identified from the table in FIG. 25(B). Eight cells in a rightmost column and in a downmost row are identified. A total sum of the products (values in the lower side) in the identified cells is calculated to obtain "5 + 4 + 1 + 0 + 0 + 0 + 0 + 0 = 10%". Similarly, a total sum of 20% is obtained when "k" is -1, a total sum of 43% is obtained when "k" is 0, and a total sum of 27% is obtained when "k" is 1. Thus, the total sum (delay probability) is obtained for each value of "k". A collection (or set) of such total sums corresponds to the combined probability distribution.

If only one preceding event exists in Step_D3 in FIG. 22, the probability distribution W(k) for the preceding event is output in Step_D3 as it is. For example, the probability distribution W(k) for the event 2 shown at the bottom of FIG. 23 is output in Step_D3 as it is because only the event 1 is the event preceding the event 2.

If the number of preceding events is 0, a predetermined initial distribution may be output in Step_D3. An example of the initial distribution is a distribution indicating that no delay occurs (the delay time is 0 with a probability of 1 (100%)), as mentioned earlier.

In Step_D4, a type (departure, arrival, or pass) of the event N is determined, and it is determined, depending on the type, whether or not early departure, early arrival, or early pass is prohibited. If no prohibition is laid, the combined probability distribution W(k) for the event N calculated in Step_D3 is output as the delay probability distribution Y(k) for the event N. If prohibition is laid, round-up processing for rounding up a probability for a negative-valued delay time is performed according to an equation (4) provided below, and the combined probability distribution subjected to round-up processing is output as the delay probability distribution Y(k) for the event N. In the round-up processing, all probabilities for negative-valued delay times in the combined probability distribution are added to a probability for a delay time of 0, and the probabilities for the negative-valued delay times are changed to be 0.

[Expression 5]

$$Y(k) = 0 \quad (k < 0)$$

$$Y(k) = \sum_{i=min}^{0} W(i) \quad (k = 0) \qquad (4)$$

$$Y(k) = W(k) \quad (k > 0)$$

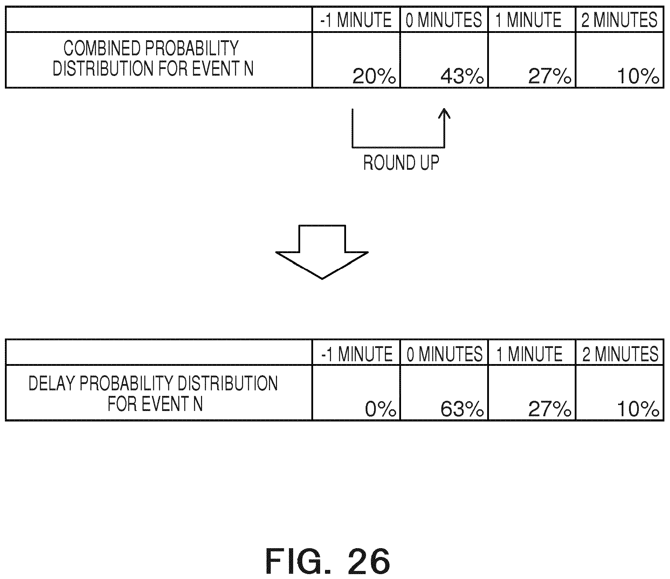

FIG. 26 is a diagram for describing a specific example of the round-up processing. The same table (combined probability distribution) as in FIG. 25(C) is shown in an upper side of FIG. 26. The table includes a negative-valued delay time, which is -1, and a probability for the delay time is 20%. Accordingly, 20% is added (rounded up) to a probability of 43% for a delay time of 0. The probability for "-1" is changed to 0%. Thus, as shown in a lower side of FIG. 26, the probability for the delay time of 0 becomes 63%. In this manner, the combined probability distribution is partially adjusted. The combined probability distribution after the round-up processing is output as the delay probability distribution Y(k) for the event N.

Here, a specific example of performing of Step_D4 in the above-described example shown in FIG. 24 will be described. Since the event 3 is a departure event (prohibited from early departure), the round-up processing is performed on the probability distribution W(k) for the event 3 obtained in Step_D2. Probabilities of 17.1%, 19.4%, and 16.7% corresponding to "k = -1, -2, -3", respectively, in the probability distribution W(k) are added to 13.5% corresponding to "k = 1" Accordingly, the probability corresponding to "k = 1" becomes 66.7%, and all the respective probabilities corresponding to "k = -1, -2, -3" become 0. The probability distribution obtained through the round-up processing is shown at the bottom of FIG. 24. Such a probability distribution is output as the delay probability distribution Y(k) for the event 3.

Through the processing as described above, a delay probability distribution for each event as shown in FIG. 16 is obtained eventually. In the above-described example, a case where the number of preceding events is one or two is described. However, the processing can be similarly performed if the number of preceding events is three or larger. That is, the same is also true when there are three or more propagation paths of delay.

Note that a description has been given of a scheme in which a delay probability distribution for each event is obtained by performing Step_C to Step_E only once for each node by propagating a probability distribution(s). However, in the processing, the probability distribution appears only as a distribution of delay time from a preceding node. If the distribution is replaced with a non-stochastic variable, the processing can be replaced with simpler processing despite time-consuming repetition processing being required.

For example, the processing in Step_D is simplified if one delay time is generated from a probability distribution by using a random number. Actually, if a delay time for each node is assumed to be a non-stochastic variable, the convolution processing in Step_D1 is modified to processing for adding a delay time generated randomly using a random number for a current node to a delay time (of a non-stochastic variable) at a preceding node. Step_D2 is modified to processing for subtracting "Margin" from the delay time obtained in Step_D1. Step_D3 is modified to processing for selecting a largest value of the delay times at the preceding nodes calculated in Step_D2. Step_D4 is mofidied to processing for selecting a larger one of the delay time calculated in Step_D3 and 0.

As described above, when Step_D is performed once, one delay time of a non-stochastic variable for an event under processing is determined. Accordingly, one delay time for each node is obtained by performing Step_C to Step_E once for each node. Thereafter, the node information is initialized, and Step_C to Step_E are performed once again for each node by using another random number, whereby a delay time of a different value from the previous value for each node can be obtained. Accordingly, a histogram of delay times for all events can be created as a result by repeatedly performing Step_C to Step_E. Accordingly, a delay probability distribution for each event may be created from the histogram obtained by repetitions.

In the above-described example, the targets are a plurality of trains (a plurality of train lines), that is, delay probability distributions for all the events included in the train lines are generated (see FIG. 16). However, delay probability distributions may be generated only for a part of trains or a part of stations (for example, a terminal station, a junction station, and the like). Delay probability distributions may be generated only for trains or stations designated by a user. An output format of delay probability distributions is not limited to the format shown in FIG. 16.

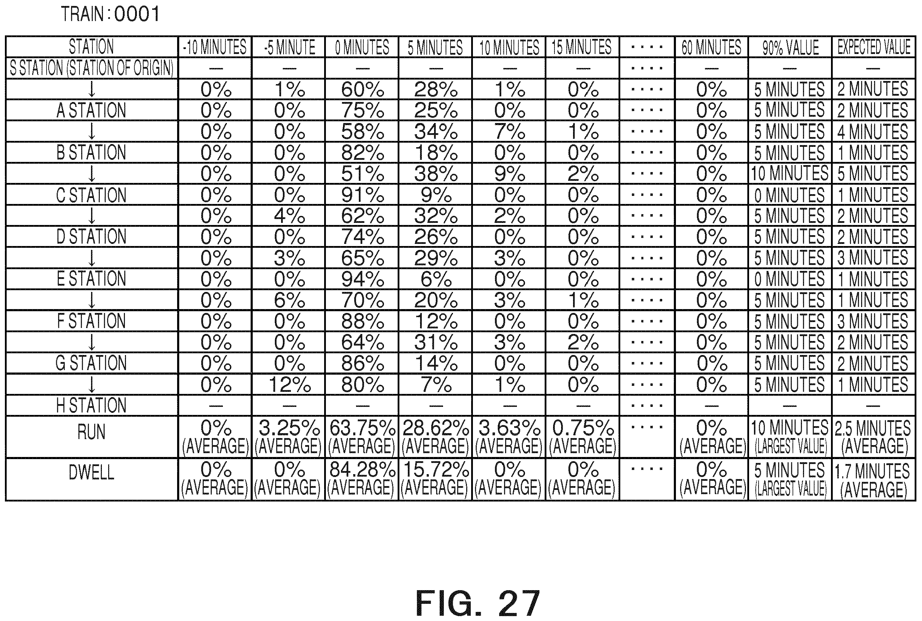

FIG. 27 shows an example of an output table including delay probability distributions generated through the processing according to the above-described present embodiment, for a train line of a train (here, a train of train number 0001) that departs from S station (station of origin) and dwells at each of A station, B station, C station, D station, E station, F station, G station, and H station (terminal). The delay probability distribution for each even is shown by using a discrete distribution in five-minute units with a range of -10 minutes to 60 minutes. A 90% value (percentile value) and an expected value of delay time in each event are shown on a right side of the table. Calculation of the 90% value and the expected value is performed by the delay probability evaluator 520.

In a station column, station names and down arrows (hereinafter, arrows) are alternately stored. A row containing an arrow corresponds to an arrival event at a station indicated by a station name in a next row. A row containing a station name corresponds to a departure event at the corresponding station.

For example, a low below the S station corresponds to an arrival event at the A station, and the delay probability distribution for the event is that the probability of a delay of -10 minutes (the delay probability for 10 minute early arrival) is 0%, the probability of a delay of -5 minutes is 1%, the probability of a delay of 0 minutes is 60%, the probability of a delay of 5 minutes is 28%, the probability of a delay of 10 minutes is 1%, the probability of a delay of 15 minutes is 0%, and so on. The 90% value for the delay probability distribution is 5 minutes, and the expected value is 2 minutes. A row of the A station corresponds to a departure event at the A station, and the delay probability distribution for the event is that the probability of a delay of -10 minutes (the delay probability for 10 minute early arrival) is 0%, the probability of a delay of -5 minutes is 0%, the probability of a delay of 0 minutes is 75%, the probability of a delay of 5 minutes is 25%, the probability of a delay of 10 minutes is 0%, the probability of a delay of 15 minutes is 0%, and so on. The 90% value for the delay probability distribution is 5 minutes, and the expected value is 2 minutes.

At the bottom of the table, an average value of the delay probabilities for the arrival events (average delay probability for run) and an average value of the delay probabilities for the departure events (average delay probability for dwell) are shown for each delay time. Calculation of such average values is performed by the delay probability evaluator 520. Moreover, a largest value of the 90% values of delay time in the arrival events and a largest value of the 90% values of delay time in the departure events are shown. An average value of the expected values for the arrival events and an average value of the expected values for the departure events are shown. Calculation of such largest values and such average values of the expected values is performed by the delay probability evaluator 520.

As described above, according to the present embodiment, the delay probability distribution for arrival at, departure from, or pass through each station can be generated from the diagram information, without using historic data other than the event-to-event delay probability distributions. Accordingly, big historic data is not required. Moreover, according to the present embodiment, creation of a frequency distribution through Monte Carlo simulation can be eliminated, and rapid evaluation of the diagram information is possible.

(Modification example 1)

By giving a predetermined delay distribution to a certain train and a certain station, probabilities of delay rippled to each subsequent train and each subsequent station and expected delay times may be calculated. The calculation is performed by the delay probability evaluator 520. For the predetermined delay distribution, for example, an extreme distribution that delays due to an accident at a specific station or the like are supposed may be used.

Statistical values such as probabilities of delays of X and more minutes occurring at a terminal or midway station, an expected value of delay time, a dispersion (variance) of delay time, and an X-th percentile value of delay time may be calculated. The expected value and X-th percentile value of delay time are described in FIG. 27.

(Modification example 2)

In the embodiment described hereinabove, a delay probability distribution for each event is generated as in FIG. 16. However, the delay probability distributions may be combined with a source diagram (planned train lines) to thereby create expected train lines. The created expected train lines may be displayed on the display 400. The creation of the expected train lines is performed by the delay probability evaluator 520. The expected train lines are train lines that are expected to be followed when the diagram (planned train lines) is actually operated.

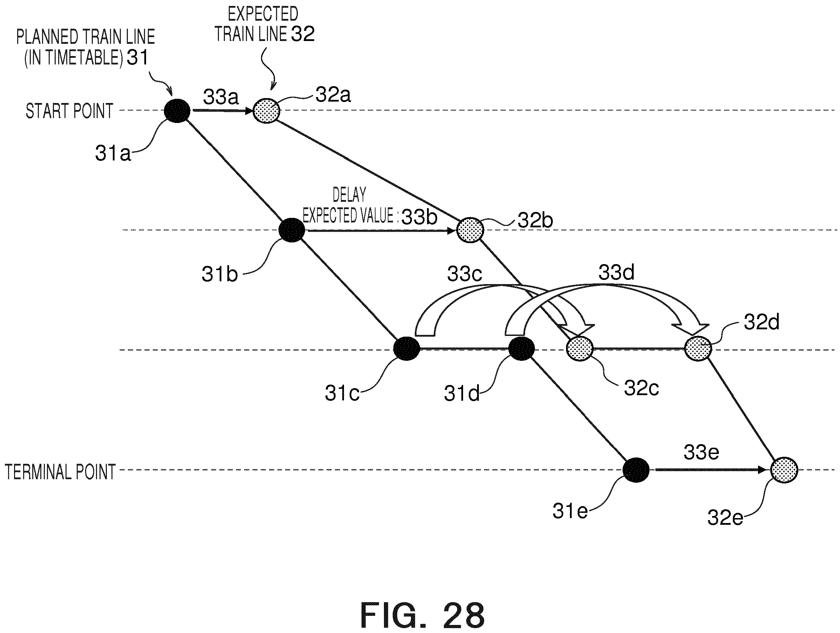

FIG. 28 shows an example of the creation of an expected train line. An expected train line 32 is created by shifting respective times of nodes 31a, 31b, 31c, 31d, and 31e on a planned train line 31 by delay expected values 33a, 33b, 33c, 33d, and 33e, respectively. That is, nodes 32a to 32e on the expected train line 32 are created by adding the delay expected values 33a to 33e to the respective times of the nodes 31a to 31e on the planned train line 31, respectively. The delay expected values 33a to 33e are indicators indicating average delay times, and may be calculated based on expected values, modes, medians or the like, of delay probability distributions for the nodes 31a to 31e on the planned train line 31.

(Modification example 3)

Evaluation indicators for a diagram, such as punctuality, quick-deliverability, and transportation capacity of the diagram, may be created by using the expected train lines created in the modification example 2. The creation of the evaluation indicators is performed by the delay probability evaluator 520. The created evaluation indicators may be displayed on the display 400.

[Punctuality]

An example of the indicator of punctuality is a delay expected value rate. An example of calculation of the delay expected value rate is shown below.

$$\text{Delay expected value rate (\%)} = \Sigma(\text{delay expected values between corresponding nodes})/\text{total number of nodes} \quad (5)$$

As shown by the equation (5), the delay expected value rate is obtained by averaging the delay expected values between nodes on an expected train line and corresponding nodes on a planned train line by all nodes. In the above-described example shown in FIG. 28, the delay expected value rate is calculated by dividing a sum of the delay expected values 33a to 33e by the total number of the nodes (= 5).

Another example of the indicator of punctuality is a delay limit excess probability.

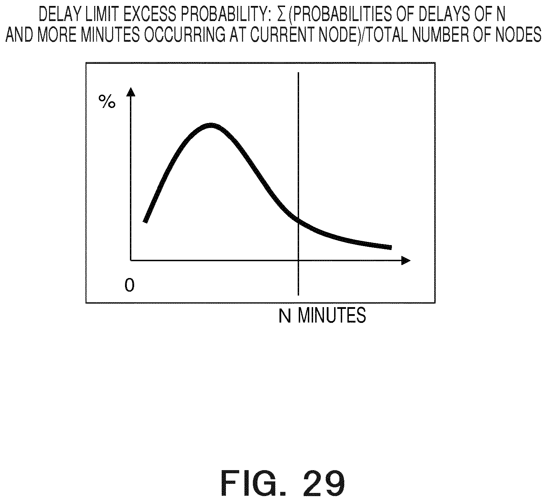

FIG. 29 is a diagram for describing the delay limit excess probability. A delay probability distribution for a certain node and a location of a delay time N [minute] are shown. An example of calculation of the delay limit excess probability in this case is shown below.

$$\text{Delay limit excess probability (\%)} = \Sigma(\text{probabilities of delays of N and more minutes occurring at a current node})/\text{total number of nodes} \quad (6)$$

As shown by the equation (6), the delay limit excess probability is obtained by averaging probabilities of delays of N and more minutes on an expected train line by all nodes. In the above-described example shown in FIG. 28, probabilities of delays of N and more minutes are calculated based on each of the delay probability distributions for the nodes 31a to 31e and added up, and the resultant sum is divided by the total number of the nodes (= 5), whereby the delay limit excess probability is calculated.

The delay limit excess probability is a significant indicator to some railway companies because a penalty is incurred if a delay of a predetermined time or longer occurs. Note that if penalty amounts for delays of N and more minutes are predetermined for a certain train or a certain station (or certain trains or certain stations), an expected value of penalty amount may be derived.

Note that in evaluation of punctuality, a mean may be calculated only for a part of midway stations or a terminal station. If statistical values on origin and destination stations of passengers (OD: Origin Destination) are known, a mean per passenger may be calculated. In the equations (5) and (6), a divisor (the total number of nodes) is an example and is not limited to the total number of nodes.

[Quick-deliverability]

An example of the indicator of quick-deliverability is a time duration required for an expected train line (an expected trip time).

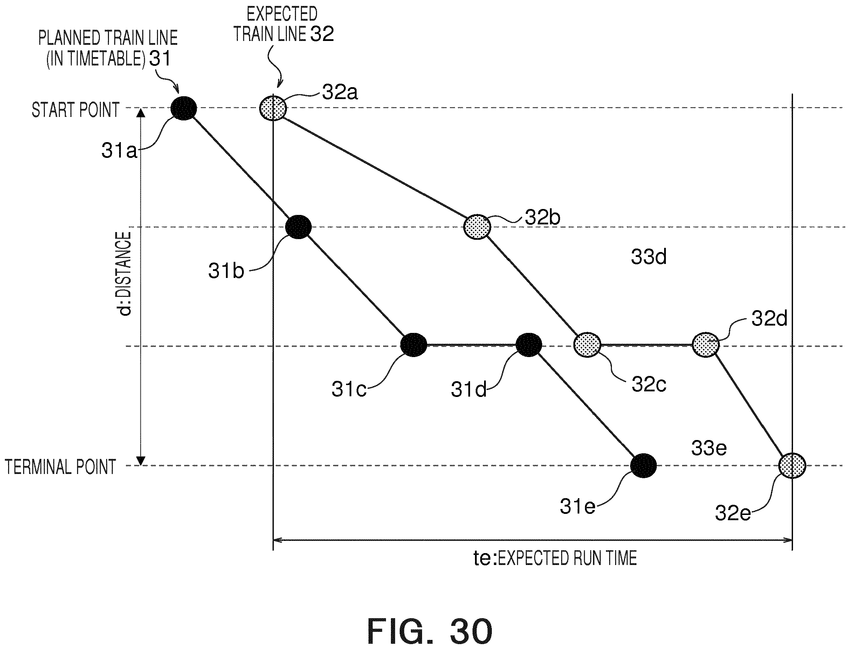

FIG. 30 shows an example of the expected trip time. The expected trip time represents a time duration te from a start point to a terminal point of an expected train line. Note that an average velocity required from the start point to the terminal point of the expected train line may be evaluated from "d/te" by using the indicator of quick-deliverability and a total distance d tripped. A mean of time durations for a plurality of train lines may be evaluated. If the passenger ODs are known, a mean per passenger may be evaluated.

[Transportation capacity]

Examples of the indicator of transportation capacity include (1) a train line rate at a specific station in a specific time slot, (2) a train line rate at a specific time, and (3) an arrival and departure rate at specific stations in a specific time slot.

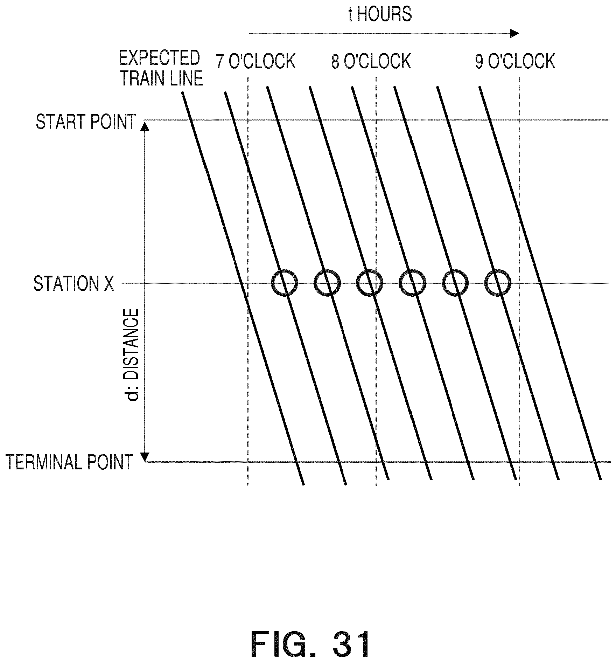

FIG. 31 is a diagram for describing the train line rate at a specific station in a specific time slot. The train line rate at a specific station in a specific time slot is a value obtained by dividing the number of trains (the number of train lines) that departs from and arrive at a certain station within a specified time slot by a time length t of the time slot. An example of calculation of the train line rate at a specific station in a specific time slot is shown below.

$$\text{Train line rate at a specific station in a specific time slot} = \text{number of all train lines at the station in the time slot}/t \quad (7)$$

FIG. 31 shows a case of calculating the train line rate at a station X in a time slot from seven o'clock to nine o'clock. The number of trains (the number of train lines) that pass through the specific station from seven o'clock to nine o'clock is six. The number of trains (the number of train lines) corresponds to the number of nodes (circles) in FIG. 30. A higher train line rate indicates a greater transportation capacity.

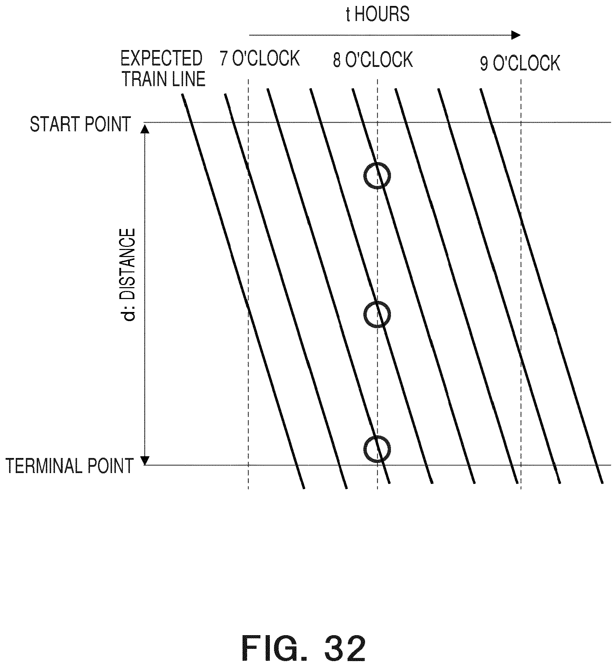

FIG. 32 is a diagram for describing the train line rate at a specific time. The train line rate at a specific time is a value obtained by dividing the number of trains (the number of train lines) that are in operation at a certain time by a distance d from a start point to a terminal point. An example of calculation of the train line rate at a specific time is shown below.

$$\text{Train line rate at a specific time} = \text{number of all train lines at the specific time}/d \quad (8)$$

FIG. 32 shows a case of calculating the train line rate at 8 o'clock. The number of trains (the number of train lines) that are in operation at 8 o'clock is three. The number of trains (the number of train lines) corresponds to the number of nodes (circles) in FIG. 32. A higher train line rate indicates a greater transportation capacity.

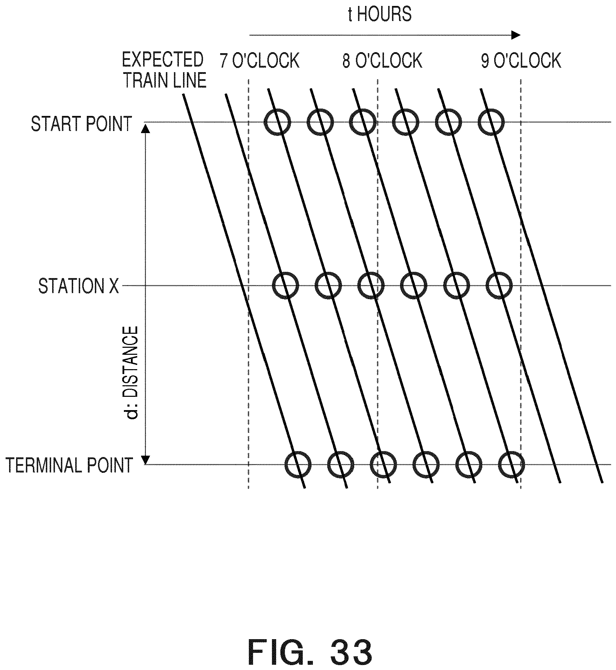

FIG. 33 is a diagram for describing the arrival and departure rate at specific stations in a specific time slot. The arrival and departure rate at specific stations in a specific time slot is a value obtained by dividing the number of arrivals and departures at specific stations within a specific time slot by a product of: a time length t of the specific time slot; and a distance d of a range where the specific stations are located. An example of calculation of the arrival and departure rate at specific stations in a specific time slot is shown below.

$$\text{Arrival and departure rate at specific stations in a specific time slot} = \text{number of arrivals and departures at the specific stations in the specific time slot}/(t \times d) \qquad (9)$$

In FIG. 33, the number of arrivals and departures at specific stations (here, three stations including a start point, a station X, and a terminal point) from 7 o'clock to 9 o'clock corresponds to the number of all nodes (circles) within a hatched area in FIG. 33. A higher arrival and departure rate indicates a greater transportation capacity (convenience) because as the arrival and departure rate is higher, occasions for passengers to board and alight increase.

Note that in the description of the equations (7) to (9), the number of nodes shown in FIGS. 31 to 33 may be replaced with the number of passengers based on the number of seats or the maximum number of passengers allowed in each train. Thus, the passenger-based transportation capacity can be evaluated. If the passenger ODs and a target value of the transportation capacity are known, whether or not the transportation capacity reaches the target value may be used as an evaluation indicator.

While certain approaches have been described, these approaches have been presented by way of example only, and are not intended to limit the scope of the invention.

Indeed, the apparatuses described herein may be embodied in a variety of other forms; furthermore various omissions, substitutions and changes in the form of the apparatuses described herein may be made, providing that such forms or modifications fall within the scope of the invention as defined by the appended claims.

**Claims**

**1.** An information processing apparatus, comprising:

a delay probability distribution calculator (500) configured to:

read out diagram information indicating a schedule of at least one vehicle travelling along a path, wherein the diagram information includes a first to n-th line information, the first to n-th line information including a plurality of events including: departure times from or arrival times at stop places of the at least one vehicle; select a first event from the events included in one line information among the first to n-th line information; select a second event preceding the first event from the events included in at least one of the first to n-th line information other than the one line information; and calculate a delay probability distribution for the first event based on:

event-to-event delay time information between the first event and the second event; and a required time interval between the first event and the second event,

**characterised in that**
the event-to-event delay time information is a geometric distribution of delay time between the first and the second event, the geometric distribution having one parameter, the one parameter being a function in which an average of the delay time is given as an input parameter of the function.

**2.** The information processing apparatus according to claim 1, wherein the second event is also selected from the events included in the one line information.

**3.** The information processing apparatus according to claim 1 or 2, wherein

the delay probability distribution calculator (500)is configured to sort the plurality of events included in the first to n-th line information in chronological order and

the delay probability distribution calculator (500) is configured to repeat to select one of the events in the sorted order as the first event.

4. The information processing apparatus according to any one of claims 1 to 3, wherein

the delay probability distribution calculator (500) is configured to identify a margin time between the first event and the second event, based on a difference between (a) a time duration between the time of the first event and the time of the second event; and (b) the required time interval between the first event and the second event, and

the delay probability distribution calculator (500) is configured to generate a first probability distribution based on an convolution operation of the time delay indicated by the event-to-event delay time information and a delay probability distribution for the second event,

the delay probability distribution calculator (500) is configured to shift the first probability distribution based on the margin time, and

the shifted first probability distribution is the delay probability distribution for the first event.

5. The information processing apparatus according to claim 4, wherein

the delay probability distribution calculator (500) is configured to generate the shifted first probability distribution for each of a plurality of the second events, and

the delay probability distribution calculator (500) is configured to combine the shifted first probability distributions to generate the delay probability distribution for the first event.

6. The information processing apparatus according to any one of claims 1 to 5, wherein

the delay probability distribution calculator (500) is configured to perform round-up processing if the first event is prohibited from taking place earlier than the time of the first event in the diagram information, and

the round-up processing is that for the delay probability distribution for the first event, probabilities for delay times of negative values are added up to a probability for a delay time of 0, and the probabilities for the delay times of negative-values are set to 0.

7. The information processing apparatus according to any one of claims 1 to 6, wherein at least one of the plurality of events in the diagram information includes that the vehicle passes through one of the stop places at a passing time.

8. The information processing apparatus according to any one of claims 1 to 7, wherein

the delay probability distribution calculator (500) is configured to calculate the delay probability distribution for each of the events included in the at least one line information,

the delay probability distribution calculator (500) is configured to shift the times of the events in the at least one line information by respective delay expected values based on the delay probability distributions and

the delay probability distribution calculator (500) is configured to generate an expected line information including the shifted times of the events.

9. The information processing apparatus according to claim 8, wherein the delay probability distribution calculator (500) is configured to calculate an indicator representing punctuality, quick-deliverability, or transportation capacity, based on the expected line information.

10. An information processing method, comprising:

reading out diagram information indicating a schedule of at least one vehicle travelling along a path, wherein the diagram information includes a first to n-th line information, the first to n-th line information including a plurality of events including: departure times from or arrival times at stop places of the at least one vehicle,

selecting a first event from the events included in one line information among the first to n-th line information;

selecting a second event preceding the first event from the events included in at least one of the first to n-th line information other than the one line information; and

calculating a delay probability distribution for the first event based on:

event-to-event delay time information between the first event and the second event; and
a required time interval between the first event and the second event;

**characterised in that**
the event-to-event delay time information is a geometric distribution of delay time between the first and the second event, the geometric distribution having one parameter, the one parameter being a function in which an average of the delay time is given as an input parameter of the function.

11. A non-transitory computer readable medium having a computer program stored therein which when the computer program is executed by a computer, causes the computer to perform processes comprising:

reading out diagram information indicating a schedule of at least one vehicle travelling along a path, wherein the diagram information includes a first to n-th line information, the first to n-th line information including a plurality of events including: departure times from or arrival times at stop places of the at least one vehicle; selecting a first event from the events included in one line information among the first to n-th line information; selecting a second event preceding the first event from the events included in at least one of the first to n-th line information other than the one line information; and calculating a delay probability distribution for the first event based on:

event-to-event delay time information between the first event and the second event; and
a required time interval between the first event and the second event,

**characterised in that**
the event-to-event delay time information is a geometric distribution of delay time between the first and the second event, the geometric distribution having one parameter, the one parameter being a function in which an average of the delay time is given as an input parameter of the function.

**Patentansprüche**

1. Informationsverarbeitungsgerät, Folgendes umfassend:

einen Verzögerungswahrscheinlichkeitsverteilungsrechner (500), welcher konfiguriert ist zum:

Auslesen einer Diagramminformation, welche einen Zeitplan von mindestens einem Fahrzeug anzeigt, welches sich entlang einer Route bewegt, wobei die Diagramminformation eine erste bis n. Linieninformation einschließt, wobei die erste bis n. Linieninformation eine Vielzahl von Ereignissen einschließt, darunter: Abfahrtszeiten von oder Ankunftszeiten an Haltestellen des mindestens einen Fahrzeugs; Auswählen eines ersten Ereignisses aus den in einer Linieninformation unter der ersten bis n. Linieninformation eingeschlossenen Ereignissen; Auswählen eines zweiten Ereignisses, welches dem ersten Ereignis vorausgeht, von den in mindestens einer der ersten bis n. Linieninformation eingeschlossenen Ereignissen, welches sich von der einen Linieninformation unterscheidet; und

Berechnen einer Verzögerungswahrscheinlichkeitsverteilung für das erste Ereignis, basierend auf:

Ereignis-zu-Ereignis-Verzögerungszeitinformation zwischen dem ersten Ereignis und dem zweiten Ereignis; und
einem erforderlichen Zeitintervall zwischen dem ersten Ereignis und dem zweiten Ereignis,
**dadurch gekennzeichnet, dass** die Ereignis-zu-Ereignis-Verzögerungszeitinformation eine geometrische Verteilung von Verzögerungszeit zwischen dem ersten und dem zweiten Ereignis ist, wobei die geometrische Verteilung einen Parameter aufweist, wobei der eine Parameter eine Funktion ist, in welcher ein Mittelwert der Verzögerungszeit als ein Eingangsparameter der Funktion gegeben ist.

2. Informationsverarbeitungsgerät nach Anspruch 1, wobei das zweite Ereignis ebenfalls aus den in der einen Linieninformation eingeschlossenen Ereignissen ausgewählt wird.

3. Informationsverarbeitungsgerät nach Anspruch 1 oder 2, wobei:

der Verzögerungswahrscheinlichkeitsverteilungsrechner (500) konfiguriert ist, um die Vielzahl von Ereignissen, welche in der ersten bis n. Linieninformation eingeschlossen ist, in chronologischer Reihenfolge zu sortieren, und der Verzögerungswahrscheinlichkeitsverteilungsrechner (500) konfiguriert ist, um die Auswahl eines der Ereignisse in der sortierten Reihenfolge als das erste Ereignis zu wiederholen.

4. Informationsverarbeitungsgerät nach einem der Ansprüche 1 bis 3, wobei der Verzögerungswahrscheinlichkeitsverteilungsrechner (500) konfiguriert ist, um eine Zeitspanne zwischen dem ersten Ereignis und dem zweiten Ereignis zu identifizieren, basierend auf einer Differenz zwischen (a) einer Zeitdauer zwischen dem Zeitpunkt des ersten Ereignisses und dem Zeitpunkt des zweiten Ereignisses; und (b) dem erforderlichen Zeitintervall zwischen dem ersten Ereignis und dem zweiten Ereignis, und

der Verzögerungswahrscheinlichkeitsverteilungsrechner (500) konfiguriert ist, um eine erste Wahrscheinlichkeitsverteilung basierend auf einer Faltungsoperation der Zeitverzögerung, welche durch die Ereignis-zu-Ereignis-Verzögerungszeitinformation angezeigt wird, und einer Verzögerungswahrscheinlichkeitsverteilung für das zweite Ereignis zu erzeugen, und
der Verzögerungswahrscheinlichkeitsverteilungsrechner (500) konfiguriert ist, um die erste Wahrscheinlichkeitsverteilung basierend auf der Zeitspanne zu verschieben, und
die verschobene erste Wahrscheinlichkeitsverteilung die Verzögerungswahrscheinlichkeitsverteilung für das erste Ereignis ist.

5. Informationsverarbeitungsgerät nach Anspruch 4, wobei:

der Verzögerungswahrscheinlichkeitsverteilungsrechner (500) konfiguriert ist, um die verschobene erste Wahrscheinlichkeitsverteilung für jedes einer Vielzahl der zweiten Ereignisse zu erzeugen, und
der Verzögerungswahrscheinlichkeitsverteilungsrechner (500) konfiguriert ist, um die verschobenen ersten Wahrscheinlichkeitsverteilungen zu kombinieren, um die Verzögerungswahrscheinlichkeitsverteilung für das erste Ereignis zu erzeugen.

6. Informationsverarbeitungsgerät nach einem der Ansprüche 1 bis 5, wobei:

der Verzögerungswahrscheinlichkeitsverteilungsrechner (500) konfiguriert ist, um eine Aufrundungsverarbeitung auszuführen, wenn es dem ersten Ereignis untersagt ist, früher als der Zeitpunkt des ersten Ereignisses in der Diagramminformation einzutreten, und
die Aufrundungsverarbeitung darin besteht, dass für die Verzögerungswahrscheinlichkeitsverteilung des ersten Ereignisses, Wahrscheinlichkeiten für Verzögerungszeiten mit negativen Werten bis zu einer Wahrscheinlichkeit einer Verzögerungszeit von 0 addiert werden, und die Wahrscheinlichkeiten für Verzögerungszeiten mit negativen Werten auf 0 gesetzt werden.

7. Informationsverarbeitungsgerät nach einem der Ansprüche 1 bis 6, wobei mindestens eines der Vielzahl von Ereignissen in der Diagramminformation die Tatsache einschließt, dass das Fahrzeug zu einer Durchgangszeit durch eine der Haltestellen passiert.

8. Informationsverarbeitungsgerät nach einem der Ansprüche 1 bis 7, wobei:

der Verzögerungswahrscheinlichkeitsverteilungsrechner (500) konfiguriert ist, um die Verzögerungswahrscheinlichkeitsverteilung für jedes der in der mindestens einen Linieninformation eingeschlossenen Ereignisse zu berechnen,
der Verzögerungswahrscheinlichkeitsverteilungsrechner (500) konfiguriert ist, um die Zeiten der Ereignisse in der mindestens einen Linieninformation um jeweilige erwartete Verzögerungswerte basierend auf den Verzögerungswahrscheinlichkeitsverteilungen zu verschieben, und
der Verzögerungswahrscheinlichkeitsverteilungsrechner (500) konfiguriert ist, um eine erwartete Linieninformation zu erzeugen, welche die verschobenen Zeiten der Ereignisse einschließt.

9. Informationsverarbeitungsgerät nach Anspruch 8, wobei der Verzögerungswahrscheinlichkeitsverteilungsrechner (500) konfiguriert ist, um einen Indikator, welcher Pünktlichkeit, Schnellzustellbarkeit oder Transportkapazität darstellt, basierend auf der erwarteten Linieninformation zu berechnen.

10. Informationsverarbeitungsverfahren, Folgendes umfassend:

Auslesen einer Diagramminformation, welche einen Zeitplan von mindestens einem Fahrzeug anzeigt, welches sich entlang einer Route bewegt, wobei die Diagramminformation eine erste bis n. Linieninformation einschließt, wobei die erste bis n. Linieninformation eine Vielzahl von Ereignissen einschließt, darunter: Abfahrtszeiten von oder Ankunftszeiten an Haltestellen des mindestens einen Fahrzeugs;

Auswählen eines ersten Ereignisses aus den in einer Linieninformation unter der ersten bis n. Linieninformation eingeschlossenen Ereignissen;

Auswählen eines zweiten Ereignisses, welches dem ersten Ereignis vorausgeht, aus den in mindestens einer der ersten bis n. Linieninformation eingeschlossenen Ereignissen, welche sich von der einen Linieninformation unterscheidet; und

Berechnen einer Verzögerungswahrscheinlichkeitsverteilung für das erste Ereignis, basierend auf:

einer Ereignis-zu-Ereignis-Verzögerungszeitinformation zwischen dem ersten Ereignis und dem zweiten Ereignis; und

einem erforderlichen Zeitintervall zwischen dem ersten Ereignis und dem zweiten Ereignis;

**dadurch gekennzeichnet, dass** die Ereignis-zu-Ereignis-Verzögerungszeitinformation eine geometrische Verteilung von Verzögerungszeit zwischen dem ersten und dem zweiten Ereignis ist, wobei die geometrische Verteilung einen Parameter aufweist, wobei der eine Parameter eine Funktion ist, in welcher ein Mittelwert der Verzögerungszeit als ein Eingangsparameter der Funktion gegeben ist.

11. Nicht transientes, computerlesbares Medium, worin ein Computerprogramm gespeichert ist, welches, wenn das Computerprogramm durch einen Computer ausgeführt wird, den Computer zum Ausführen von Prozessen veranlasst, welche Folgendes umfassen:

Auslesen einer Diagramminformation, welche einen Zeitplan von mindestens einem Fahrzeug anzeigt, welches sich entlang einer Route bewegt, wobei die Diagramminformation eine erste bis n. Linieninformation einschließt, wobei die erste bis n. Linieninformation eine Vielzahl von Ereignissen einschließt, darunter: Abfahrtszeiten von oder Ankunftszeiten an Haltestellen des mindestens einen Fahrzeugs;

Auswählen eines ersten Ereignisses aus den in einer Linieninformation unter der ersten bis n. Linieninformation eingeschlossenen Ereignissen;

Auswählen eines zweiten Ereignisses, welches dem ersten Ereignis vorausgeht, aus den in mindestens einer der ersten bis n. Linieninformation eingeschlossenen Ereignissen, welche sich von der einen Linieninformation unterscheidet; und

Berechnen einer Verzögerungswahrscheinlichkeitsverteilung für das erste Ereignis, basierend auf: Ereignis-zu-Ereignis-Verzögerungszeitinformation zwischen dem ersten Ereignis und dem zweiten Ereignis; und einem erforderlichen Zeitintervall zwischen dem ersten Ereignis und dem zweiten Ereignis, **dadurch gekennzeichnet, dass** die Ereignis-zu-Ereignis-Verzögerungszeitinformation eine geometrische Verteilung von Verzögerungszeit zwischen dem ersten und dem zweiten Ereignis ist, wobei die geometrische Verteilung einen Parameter aufweist, wobei der eine Parameter eine Funktion ist, in welcher ein Mittelwert der Verzögerungszeit als ein Eingangsparameter der Funktion gegeben ist.

## Revendications

1. Appareil de traitement d'informations, comprenant :

un calculateur de distribution de probabilités de retard (500) qui est configuré pour :

lire une information de schéma qui représente une planification d'au moins un véhicule qui se déplace suivant une voie, dans lequel l'information de schéma inclut des première à n-ième informations de ligne, les première à n-ième informations de ligne incluant une pluralité d'événements y compris : des horaires de départ ou des horaires d'arrivée à des lieux d'arrêt de l'au moins un véhicule ;

sélectionner un premier événement parmi les événements qui sont inclus dans une information de ligne considérée parmi les première à n-ième informations de ligne ;

sélectionner un second événement qui précède le premier événement parmi les événements qui sont inclus dans au moins l'une des première à n-ième informations de ligne autre que l'information de ligne considérée ; et

calculer une distribution de probabilités de retard pour le premier événement sur la base de :

une information de temps de retard événement à événement entre le premier événement et le second événement ; et
un intervalle de temps requis entre le premier événement et le second événement ;

**caractérisé en ce que** :
l'information de temps de retard événement à événement est une distribution géométrique de temps de retard entre les premier et second événements, la distribution géométrique comportant un paramètre, le paramètre étant une fonction dans laquelle une moyenne du temps de retard est donnée en tant que paramètre d'entrée de la fonction.

2. Appareil de traitement d'informations selon la revendication 1, dans lequel le second événement est également sélectionné parmi les événements qui sont inclus dans l'information de ligne considérée.

3. Appareil de traitement d'informations selon la revendication 1 ou 2, dans lequel :

le calculateur de distribution de probabilités de retard (500) est configuré pour trier la pluralité d'événements qui sont inclus dans les première à n-ième informations de ligne selon un ordre chronologique ; et
le calculateur de distribution de probabilités de retard (500) est configuré pour répéter la sélection de l'un des événements selon l'ordre trié en tant que premier événement.

4. Appareil de traitement d'informations selon l'une quelconque des revendications 1 à 3, dans lequel :

le calculateur de distribution de probabilités de retard (500) est configuré pour identifier un temps de marge entre le premier événement et le second événement, sur la base d'une différence entre (a) une durée temporelle entre l'instant du premier événement et l'instant du second événement ; et (b) l'intervalle de temps requis entre le premier événement et le second événement ; et
le calculateur de distribution de probabilités de retard (500) est configuré pour générer une première distribution de probabilités sur la base d'une opération de convolution du retard temporel qui est représenté par l'information de temps de retard événement à événement et d'une distribution de probabilités de retard pour le second événement ;
le calculateur de distribution de probabilités de retard (500) est configuré pour décaler la première distribution de probabilités sur la base du temps de marge ; et
la première distribution de probabilités décalée est la distribution de probabilités de retard pour le premier événement.

5. Appareil de traitement d'informations selon la revendication 4, dans lequel :

le calculateur de distribution de probabilités de retard (500) est configuré pour générer la première distribution de probabilités décalée pour chacun d'une pluralité des seconds événements ; et
le calculateur de distribution de probabilités de retard (500) est configuré pour combiner les premières distributions de probabilités décalées pour générer la distribution de probabilités de retard pour le premier événement.

6. Appareil de traitement d'informations selon l'une quelconque des revendications 1 à 5, dans lequel :

le calculateur de distribution de probabilités de retard (500) est configuré pour effectuer un traitement d'arrondi par excès si la réalisation du premier événement est empêchée plus tôt que l'instant du premier événement dans l'information de schéma ; et
le traitement d'arrondi par excès consiste en ce que, pour la distribution de probabilités de retard pour le premier événement, les probabilités pour les temps de retard de valeurs négatives sont additionnées à une probabilité pour un temps de retard de 0, et les probabilités pour les temps de retard de valeurs négatives sont définies à 0.

7. Appareil de traitement d'informations selon l'une quelconque des revendications 1 à 6, dans lequel au moins l'un de la pluralité d'événements dans l'information de schéma inclut le fait que le véhicule passe par l'un des lieux d'arrêt à un instant de passage.

8. Appareil de traitement d'informations selon l'une quelconque des revendications 1 à 7, dans lequel :

le calculateur de distribution de probabilités de retard (500) est configuré pour calculer la distribution de probabilités de retard pour chacun des événements qui sont inclus dans l'au moins une information de ligne ;

le calculateur de distribution de probabilités de retard (500) est configuré pour décaler les instants des événements dans l'au moins une information de ligne de valeurs attendues de retard respectives sur la base des distributions de probabilités de retard ; et

le calculateur de distribution de probabilités de retard (500) est configuré pour générer une information de ligne attendue qui inclut les instants décalés des événements.

9. Appareil de traitement d'informations selon la revendication 8, dans lequel le calculateur de distribution de probabilités de retard (500) est configuré pour calculer un indicateur qui représente la ponctualité, l'acheminement rapide ou la capacité de transport, sur la base de l'information de ligne attendue.

10. Procédé de traitement d'informations, comprenant :

la lecture d'une information de schéma qui représente une planification d'au moins un véhicule qui se déplace suivant une voie, dans lequel l'information de schéma inclut des première à n-ième informations de ligne, les première à n-ième informations de ligne incluant une pluralité d'événements y compris : des horaires de départ ou des horaires d'arrivée à des lieux d'arrêt de l'au moins un véhicule ;

la sélection d'un premier événement parmi les événements qui sont inclus dans une information de ligne considérée parmi les première à n-ième informations de ligne ;

la sélection d'un second événement qui précède le premier événement parmi les événements qui sont inclus dans au moins l'une des première à n-ième informations de ligne autre que l'information de ligne considérée ; et

le calcul d'une distribution de probabilités de retard pour le premier événement sur la base de :

une information de temps de retard événement à événement entre le premier événement et le second événement ; et

un intervalle de temps requis entre le premier événement et le second événement ;

caractérisé en ce que :

l'information de temps de retard événement à événement est une distribution géométrique de temps de retard entre les premier et second événements, la distribution géométrique comportant un paramètre, le paramètre étant une fonction dans laquelle une moyenne du temps de retard est donnée en tant que paramètre d'entrée de la fonction.

11. Support non transitoire lisible par ordinateur comportant un programme informatique stocké en son sein qui, lorsque le programme informatique est exécuté par un ordinateur, a pour effet que l'ordinateur réalise les processus comprenant :

la lecture d'une information de schéma qui représente une planification d'au moins un véhicule qui se déplace suivant une voie, dans lequel l'information de schéma inclut des première à n-ième informations de ligne, les première à n-ième informations de ligne incluant une pluralité d'événements y compris : des horaires de départ ou des horaires d'arrivée à des lieux d'arrêt de l'au moins un véhicule ;

la sélection d'un premier événement parmi les événements qui sont inclus dans une information de ligne considérée parmi les première à n-ième informations de ligne ;

la sélection d'un second événement qui précède le premier événement parmi les événements qui sont inclus dans au moins l'une des première à n-ième informations de ligne autre que l'information de ligne considérée ; et

le calcul d'une distribution de probabilités de retard pour le premier événement sur la base de :

une information de temps de retard événement à événement entre le premier événement et le second événement ; et

un intervalle de temps requis entre le premier événement et le second événement ;

caractérisé en ce que :

l'information de temps de retard événement à événement est une distribution géométrique de temps de retard entre les premier et second événements, la distribution géométrique comportant un paramètre, le paramètre étant une fonction dans laquelle une moyenne du temps de retard est donnée en tant que paramètre d'entrée de la fonction.

DIAGRAM EVALUATION
APPARATUS 100

FIG. 1

EP 3 656 645 B1

FIG. 2A

FIG. 2B

EP 3 656 645 B1

| TRAIN | | | MOVING WITHIN STATION | | M1 | M2 |

TRAIN INFORMATION · · · · · · TIMETABLE · · · · · · | MARGIN TIME

| STATION | TRACK | PASS/DWELL | ARRIVAL TIME | DEPARTURE TIME | RUN TIME | DWELL TIME |
|---------|-------|-----------|--------------|----------------|----------|------------|
| A | 1 | STOP | | 8:00 | | |
| B | 1 | STOP | 8:10 | 8:12 | 00:10 | 00:02 |
| C | 1 | STOP | 8:32 | | 00:20 | |

⋮

TRAIN NUMBER : 000001

TYPE | REGULAR/IRREGULAR : LOCAL | REGULAR

MODEL | CLASS :

REFERENCE TRAIN :

DEPARTURE TIME CHANGE | CHANGE

DEPARTURE TIME : 8:00

< PRECEDING | SUBSEQUENT >

COPY | COPY PRECEDING | COPY SUBSEQUENT

INTERVAL × NUMBER OF TIMES :

DIVISION | DIVIDE

STATION :

DELETION | DELETE

FIG. 3

| id | TIME | STATION | type |
|---|---|---|---|
| | 8:00 | A | DEPARTURE |
| | 8:10 | B | ARRIVAL |
| | 8:12 | B | DEPARTURE |
| TRAIN LINE 1 | 8:32 | C | ARRIVAL |
| | 8:20 | A | DEPARTURE |
| | 8:28 | B | PASS |
| TRAIN LINE 2 | 8:44 | C | ARRIVAL |
| | 8:30 | A | DEPARTURE |
| | 8:40 | B | ARRIVAL |
| | 8:42 | B | DEPARTURE |
| TRAIN LINE 3 | 9:02 | C | ARRIVAL |

# FIG. 4

FIG. 5

EP 3 656 645 B1

| id | TIME (FOR SORTING) | STATION | type |
|---|---|---|---|
| | 8:00 | A | DEPARTURE |
| | 8:10 | B | ARRIVAL |
| | 8:12 | B | DEPARTURE |
| | 8:32 | C | ARRIVAL |
| | 8:40 | C | DEPARTURE |
| | 9:00 | B | ARRIVAL |
| | 9:02 | B | DEPARTURE |
| | 9:12 | A | ARRIVAL |
| | 9:14 | A | DEPARTURE |
| | 9:24 | B | ARRIVAL |
| | 9:26 | B | DEPARTURE |
| TRAIN LINE 4 | 9:46 | C | ARRIVAL |
| | 8:40 | A | DEPARTURE |
| | 8:50 | B | ARRIVAL |
| | 8:52 | B | DEPARTURE |
| | 9:12 | C | ARRIVAL |
| | 9:20 | C | DEPARTURE |
| | 9:40 | B | ARRIVAL |
| | 9:42 | B | DEPARTURE |
| | 9:52 | A | ARRIVAL |
| | 9:54 | A | DEPARTURE |
| | 10:04 | B | ARRIVAL |
| | 10:06 | B | DEPARTURE |
| TRAIN LINE 5 | 10:26 | C | ARRIVAL |

# FIG. 6

FIG. 7

EP 3 656 645 B1

- AVERAGE DELAY TIME BETWEEN A AND B STATIONS (LOCAL): 2 MINUTES

- AVERAGE DELAY TIME BETWEEN A AND B STATIONS (EXPRESS): 2 MINUTES

- AVERAGE DELAY TIME BETWEEN B AND C STATIONS (LOCAL): 2 MINUTES

- AVERAGE DELAY TIME BETWEEN B AND C STATIONS (EXPRESS): 2 MINUTES

- AVERAGE DELAY TIME IN DWELL TIME AT A STATION: 1 MINUTE

- AVERAGE DELAY TIME IN DWELL TIME AT B STATION: 1 MINUTE

- AVERAGE DELAY TIME IN DWELL TIME AT C STATION: 1 MINUTE

# FIG. 8

EXAMPLE OF EVENT-TO-EVENT DELAY PROBABILITY DISTRIBUTION D(k)
(GEOMETRIC DISTRIBUTION)

**FIG. 9**

| LIST | DWELL/TURNAROUND | RUN |
|---|---|---|

| DWELL/TURNAROUND TIME DURATION | PREVIOUS ITEM | NEXT ITEM |
|---|---|---|

| CANCEL | | UPDATE |
|---|---|---|

DWELL/TURNAROUND NAME IN TABLE :
SECTION :
DIRECTION :

| DWELL | TURNAROUND |
|---|---|

| STATION | MINIMUM REQUIRED TIME INTERVAL | MARGIN TIME | DWELL TIME | AVERAGE DELAY |
|---|---|---|---|---|
| B | 00:01 | 00:01 | 00:02 | 00:01 |

⋮

| COLLECTIVE SETTING | | SET |
|---|---|---|

ITEM SELECTION | TIME :

| | REDUCE | INCREASE |
|---|---|---|

| DWELL TIME INTAKE | COPY ALL | SET |
|---|---|---|

NAME IN TABLE :

| NEWLY CREATE | | DELETE |
|---|---|---|

# FIG. 10

34

| LIST | DWELL/TURNAROUND | | RUN |
|---|---|---|---|
| DWELL/TURNAROUND TIME DURATION | PREVIOUS ITEM | | NEXT ITEM |
| CANCEL | | | UPDATE |

DWELL/TURNAROUND NAME IN TABLE :_____:

SECTION :_____:

DIRECTION :_____:

| DWELL | TURNAROUND |
|---|---|

| STATION | MINIMUM REQUIRED TIME INTERVAL | MARGIN TIME | TURNAROUND TIME DURATION | DELAY TIME |
|---|---|---|---|---|
| C | 00:10 | 00:02 | 00:12 | 00:03 |

⋮

| COLLECTIVE SETTING | | SET |
|---|---|---|

ITEM SELECTION │ TIME :_____: :_____:

| REDUCE | INCREASE |
|---|---|

| DWELL TIME INTAKE | COPY ALL | SET |
|---|---|---|

NAME IN TABLE :_____:

| NEWLY CREATE | DELETE |
|---|---|

## FIG. 11

| LIST | DWELL/TURNAROUND | RUN |
|------|------------------|-----|

RUN TIME

| | PREVIOUS ITEM | NEXT ITEM |

| CANCEL | | UPDATE |

TRIP NAME IN TABLE :_____
SECTION :_____
DIRECTION :_____

| DWELL→DWELL | DWELL→PASS | PASS→DWELL | PASS→PASS |

| DEPARTURE STATION | ARRIVAL STATION | MINIMUM REQUIRED TIME INTERVAL | MARGIN TIME | RUN TIME | AVERAGE DELAY |
|---|---|---|---|---|---|
| A | B | 00:08 | 00:02 | 00:10 | 00:02 |

⋮

RUN TIME INTAKE

| | COPY ALL | SET |

⟨17⟩ RUN CURVE

RUN CURVE PLAN :_____

⟨17⟩ DEFINITION IN TABLE

NAME IN TABLE :_____

| NEWLY CREATE | | DELETE |

FIG. 12

- MINIMUM DWELL TIME

  · MINIMUM DWELL TIME AT A STATION: 1 MINUTE

  · MINIMUM DWELL TIME AT B STATION: 1 MINUTE

  · MINIMUM DWELL TIME STATION: 1 MINUTE


- MINIMUM RUN TIME

  · MINIMUM RUN TIME BETWEEN A AND B STATIONS (LOCAL, INBOUND): 8 MINUTES

  · MINIMUM RUN TIME BETWEEN A AND B STATIONS (LOCAL, OUTBOUND): 8 MINUTES

  · MINIMUM RUN TIME BETWEEN B AND C STATIONS (LOCAL, INBOUND): 18 MINUTES

  · MINIMUM RUN TIME BETWEEN B AND C STATIONS (LOCAL, OUTBOUND): 18 MINUTES

  · MINIMUM RUN TIME BETWEEN A AND B STATIONS (EXPRESS, INBOUND): 6 MINUTES

  · MINIMUM RUN TIME BETWEEN A AND B STATIONS (EXPRESS, OUTBOUND): 6 MINUTES

  · MINIMUM RUN TIME BETWEEN B AND C STATIONS (EXPRESS, INBOUND): 14 MINUTES

  · MINIMUM RUN TIME BETWEEN B AND C STATIONS (EXPRESS, OUTBOUND): 14 MINUTES

# FIG. 13

- RESTRICTION ON ARRIVAL-DEPARTURE TIME INTERVAL FROM PRECEDING TRAIN LINE
  · LOWER LIMIT OF ARRIVAL-DEPARTURE TIME INTERVAL AT A STATION: 10 MINUTES
  · LOWER LIMIT OF ARRIVAL-DEPARTURE TIME INTERVAL AT B STATION: 10 MINUTES
  · LOWER LIMIT OF ARRIVAL-DEPARTURE TIME INTERVAL AT C STATION: 10 MINUTES

# FIG. 14

| TRAIN | | MOVEMENT WITHIN STATION | | M1 | M2 |
|---|---|---|---|---|---|

| STATION | TRACK | PASS/DWELL | MINIMUM REQUIRED TIME INTERVAL | MARGIN TIME | TOTAL MARGIN | DWELL /RUN |
|---|---|---|---|---|---|---|
| A | 1 | DWELL | 00:01 | 00:01 | 00:01 | 00:02 |
| B | 1 | PASS | 00:08 | 00:01 | 00:02 | 00:10 |
| C | 1 | DWELL | 00:01 | 00:03 | 00:05 | 00:04 |

TRAIN INFORMATION — TIMETABLE — MARGIN TIME

⋮

TRAIN NUMBER 000002

TYPE | REGULAR/IRREGULAR

MODEL | CLASS

REFERENCE TRAIN

TRIP DEFINITION IN TABLE — SET

DWELL DEFINITION IN TABLE — SET

SUSPENSION — SUSPEND

STATION

CANCEL SUSPENSION — SUSPEND PRECEDING | SUSPEND SUBSEQUENT

AUTHORITY — CHANGE

OPERATOR | DEPARTMENT

USER

# FIG. 15

■DELAY TIME PROBABILITY DISTRIBUTION FOR {DEPARTURE/ARRIVAL/PASS} EVENT AT EACH STATION

DELAY TIME →

| id | -5 | -4 | -3 | -2 | -1 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|
| 1 | 0.0% | 0.0% | 0.0% | 0.0% | 0.0% | 100.0% | 0.0% | 0.0% | 0.0% | 0.0% | 0.0% | 0.0% | 0.0% | 0.0% | 0.0% | 0.0% | 0.0% | 0.0% | 0.0% | 0.0% | 0.0% |
| 2 | 0.0% | 0.0% | 0.0% | 33.3% | 22.2% | 14.8% | 9.9% | 6.6% | 4.4% | 2.9% | 2.0% | 1.3% | 0.9% | 0.6% | 0.4% | 0.3% | 0.2% | 0.1% | 0.2% | 0.0% | 0.0% |
| 3 | 0.0% | 0.0% | 0.0% | 0.0% | 0.0% | 66.7% | 10.0% | 7.2% | 5.1% | 3.5% | 2.4% | 1.6% | 1.1% | 0.7% | 0.5% | 0.3% | 0.2% | 0.2% | 0.1% | 0.1% | 0.0% |
| 4 | 0.0% | 0.0% | 0.0% | 22.2% | 18.2% | 14.5% | 11.4% | 8.8% | 6.6% | 5.0% | 3.7% | 2.7% | 2.0% | 1.4% | 1.0% | 0.8% | 0.5% | 0.4% | 0.8% | 0.0% | 0.0% |
| 5 | 0.0% | 0.0% | 0.0% | 0.0% | 0.0% | 100.0% | 0.0% | 0.0% | 0.0% | 0.0% | 0.0% | 0.0% | 0.0% | 0.0% | 0.0% | 0.0% | 0.0% | 0.0% | 0.0% | 0.0% | 0.0% |
| 6 | 0.0% | 0.0% | 0.0% | 33.2% | 22.2% | 14.9% | 10.0% | 6.7% | 4.4% | 2.9% | 2.0% | 1.3% | 0.9% | 0.6% | 0.4% | 0.3% | 0.2% | 0.1% | 0.2% | 0.0% | 0.0% |
| 7 | 0.0% | 10.8% | 14.7% | 14.9% | 13.4% | 11.2% | 9.4% | 6.9% | 5.2% | 3.9% | 2.9% | 2.1% | 1.5% | 1.1% | 0.8% | 0.6% | 0.5% | 0.3% | 0.4% | 0.0% | 0.0% |
| 8 | 0.0% | 0.0% | 0.0% | 0.0% | 0.0% | 100.0% | 0.0% | 0.0% | 0.0% | 0.0% | 0.0% | 0.0% | 0.0% | 0.0% | 0.0% | 0.0% | 0.0% | 0.0% | 0.0% | 0.0% | 0.0% |
| 9 | 0.0% | 0.0% | 0.0% | 33.3% | 22.3% | 14.9% | 10.1% | 6.6% | 4.4% | 2.9% | 2.0% | 1.3% | 0.9% | 0.6% | 0.4% | 0.3% | 0.2% | 0.1% | 0.2% | 0.0% | 0.0% |
| 10 | 0.0% | 0.0% | 0.0% | 0.0% | 0.0% | 66.9% | 10.1% | 7.3% | 5.1% | 3.5% | 2.4% | 1.6% | 1.1% | 0.7% | 0.5% | 0.3% | 0.2% | 0.2% | 0.1% | -0.3% | 0.0% |
| 11 | 0.0% | 0.0% | 0.0% | 22.3% | 18.4% | 14.8% | 11.8% | 8.8% | 6.7% | 5.0% | 3.7% | 2.7% | 2.0% | 1.4% | 1.0% | 0.8% | 0.5% | 0.3% | 0.6% | 0.0% | 0.0% |

EVENT
(DEPARTURE/ARRIVAL/PASS EVENT)

FIG. 16

EP 3 656 645 B1

OUTPUT: EXAMPLE OF DELAY PROBABILITY DISTRIBUTION (FIRST TRAIN LINE ONLY)

FIG. 17

```
                    ┌─────────┐
                    │  START  │
                    └─────────┘
                         │
                         ▼
        ┌───────────────────────────────────┐
        │    GENERATE EVENT INFORMATION     │─── Step_A
        └───────────────────────────────────┘
                         │
                         ▼
        ┌───────────────────────────────────┐
        │   DETERMINE ORDER OF EVALUATION   │
        │        OF EVENT INFORMATION       │─── Step_B
        │     (ARRIVAL, DEPARTURE, PASS)    │
        └───────────────────────────────────┘
                         │
                         ▼
        ┌───────────────────────────────────┐
        │  SELECT ELEMENT AT TOP OF EVENT   │
        │       LIST (ASSUME ELEMENT        │─── Step_C
        │       AS EVENT INFORMATION N)     │
        └───────────────────────────────────┘
                         │
                         ▼
        ┌───────────────────────────────────┐
        │   CALCULATE DELAY PROBABILITY     │
        │       DISTRIBUTION FOR EVENT      │─── Step_D
        │           INFORMATION N           │
        └───────────────────────────────────┘
                         │
                         ▼
                   ╱───────────╲
                  ╱     ARE     ╲       Step_E
         NO  ◄───  ALL EVENTS   ───
                  ╲  PROCESSED? ╱
                   ╲───────────╱
                         │ YES
                         ▼
        ┌───────────────────────────────────┐
        │          OUTPUT RESULT            │─── Step_F
        └───────────────────────────────────┘
                         │
                         ▼
                    ┌─────────┐
                    │   END   │
                    └─────────┘
```

# FIG. 18

START OF
Step_A

SET ARRIVAL, DEPARTURE
AND PASS AS EVENTS
AND SET TIME ON EACH EVENT
Step_A1

SET INFORMATION INDICATING "TRUE" ON ARRIVAL
AND PASS EVENTS AND INFORMATION INDICATING
"FALSE" ON DEPARTURE EVENTS
Step_A2

· SET EVENT ID OF IMMEDIATELY PRECEDING EVENT
ON SELF TRAIN LINE AS PRECEDING EVENT ID
· DETERMINE TYPE (LOCAL/EXPRESS) OF
SELF TRAIN LINE AND CALCULATE
CORRESPONDING MARGIN TIME
· SET AVERAGE DELAY TIME
Step_A3

IF CURRENT EVENT IS DEPARTURE EVENT
AND IF PRECEDING TRAIN LINE EXISTS,
SET ARRIVAL EVENT OR THE LIKE ON PRECEDING
TRAIN LINE AS EVENT ID AND CALCULATE
CORRESPONDING MARGIN TIME
Step_A4

ARE ALL EVENTS
PROCESSED?
Step_A5

NO

YES

END OF
Step_A

# FIG. 19

| ID | TIME | PERMISSIBILITY OF EARLY DEPARTURE OR THE LIKE | CONNECTION INFORMATION WITH IMMEDIATELY PRECEDING EVENT ON SELF TRAIN LINE | | | CONNECTION INFORMATION WITH EVENT ON PRECEDING TRAIN LINE | |
|---|---|---|---|---|---|---|---|
| | | | SELF TRAIN LINE PRECEDING EVENT ID | MARGIN | AVERAGE DELAY TIME | PRECEDING TRAIN LINE EVENT ID | MARGIN |
| 1 | 0 | 0 | -1 | 0 | 0 | -1 | 0 |
| 2 | 10 | 1 | 1 | 2 | 2 | -1 | 0 |
| 3 | 12 | 0 | 2 | 0 | 1 | -1 | 0 |
| 4 | 32 | 1 | 3 | 2 | 2 | -1 | 0 |
| 5 | 20 | 0 | -1 | 0 | 0 | 1 | 10 |
| 6 | 28 | 1 | 5 | 2 | 2 | 3 | 12 |
| 7 | 44 | 1 | 6 | 2 | 2 | 4 | 12 |
| 8 | 30 | 0 | -1 | 0 | 0 | 5 | 10 |
| 9 | 40 | 1 | 8 | 2 | 2 | 6 | 12 |
| 10 | 42 | 0 | 9 | 0 | 1 | -1 | 0 |
| 11 | 62 | 1 | 10 | 2 | 2 | 7 | 12 |

# FIG. 20

```
┌─────────────────┐
│    START OF     │
│     Step_D      │
└─────────────────┘
         │
         ▼
┌──────────────────────────────────────────────────────┐
│   LOOP: FOR ALL EVENTS s PRECEDING EVENT N            │
└──────────────────────────────────────────────────────┘
         │
         ▼
┌──────────────────────────────────────────────────────┐
│ CALCULATE PROBABILITY DISTRIBUTION V(k) BY CONVOLUTING│
│      EVENT-TO-EVENT DELAY PROBABILITY BETWEEN         │          Step_D1
│   "s" AND "N" INTO DELAY PROBABILITY DISTRIBUTION     │
│                    FOR EVENT s                        │
└──────────────────────────────────────────────────────┘
         │
         ▼
┌──────────────────────────────────────────────────────┐
│    CALCULATE EVENT-TO-EVENT MARGIN BETWEEN            │
│       "s" AND "N" AND CALCULATE PROBABILITY           │          Step_D2
│         DISTRIBUTION W(k) BY SHIFTING                 │
│        DISTRIBUTION V(k) by THE MARGIN                │
└──────────────────────────────────────────────────────┘
         │
         ▼
┌──────────────────────────────────────────────────────┐
│                                                      │
└──────────────────────────────────────────────────────┘
         │
         ▼
┌──────────────────────────────────────────────────────┐
│   CALCULATE COMBINED PROBABILITY DISTRIBUTION         │
│    Y(k) BASED ON LARGEST VALUE OF PROBABILITY         │          Step_D3
│    VARIABLE OF PROBABILITY DISTRIBUTION W(k)          │
│           FOR EACH PRECEDING EVENT                    │
└──────────────────────────────────────────────────────┘
         │
         ▼
┌──────────────────────────────────────────────────────┐
│  IF EVENT N IS PROHIBITED FROM EARLY DEPARTURE,       │
│   ADD PROBABILITY FOR DELAY TIME LESS THAN 0          │          Step_D4
│      TO PROBABILITY FOR DELAY TIME OF 0               │
│   IN COMBINED PROBABILITY DISTRIBUTION Y(k)           │
└──────────────────────────────────────────────────────┘
         │
         ▼
┌─────────────────┐
│     END OF      │
│     Step_D      │
└─────────────────┘
```

# FIG. 21

INPUT 1: PROBABILITY DISTRIBUTION $X_1$
FOR PRECEDING EVENT $N_1$
ON SELF TRAIN LINE

Input 2: PROBABILITY DISTRIBUTION $X_2$
FOR EVENT $N_2$ ON PRECEDING
TRAIN LINE

Step_D1 — CONVOLUTE EVENT-TO-EVENT DELAY PROBABILITY

Step_D1 — CONVOLUTE EVENT-TO-EVENT DELAY PROBABILITY

$$V_1(k) = \sum_{i=min}^{k} X_1(i) \cdot D(k-i)$$

$$V_2(k) = \sum_{i=min}^{k} X_2(i) \cdot D(k-i)$$

Step_D2 — SHIFT BY MARGIN (M1)

Step_D2 — SHIFT BY MARGIN (M2)

$$W_1(k) = V_1(k+M1)$$

$$W_2(k) = V_1(k+M2)$$

Step_D3 — COMBINE $W_1(k)$ AND $W_2(k)$

COMBINED PROBABILITY DISTRIBUTION W(k)

Step_D4 — ADD PROBABILITY FOR DELAY TIME
LESS THAN 0 TO PROBABILITY
FOR DELAY TIME OF 0

OUTPUT: DELAY PROBABILITY DISTRIBUTION Y(k) FOR EVENT N

## FIG. 22

EXAMPLE OF CALCULATION IN Step_D IN CASE OF EVENT 2 (ARRIVAL EVENT)

INPUT: PROBABILITY DISTRIBUTION X(i) FOR PRECEDING EVENT (EVENT 1) ON SELF TRAIN LINE

| | -5 | -4 | -3 | -2 | -1 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|
| X | 0.0% | 0.0% | 0.0% | 0.0% | 0.0% | 100.0% | 0.0% | 0.0% | 0.0% | 0.0% | 0.0% | 0.0% | 0.0% | 0.0% | 0.0% | 0.0% | 0.0% | 0.0% | 0.0% | 0.0% | 0.0% |

Step_D1 — CONVOLUTION OPERATION

| | -5 | -4 | -3 | -2 | -1 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|
| V(k) | 0.0% | 0.0% | 0.0% | 0.0% | 0.0% | 33.3% | 22.2% | 14.8% | 9.9% | 6.6% | 4.4% | 2.9% | 2.0% | 1.3% | 0.9% | 0.6% | 0.4% | 0.3% | 0.2% | 0.1% | 0.1% |

Step_D2 — SHIFT BY MARGIN (= 2)

OUTPUT: PROBABILITY DISTRIBUTION W(k) (= PROBABILITY DISTRIBUTION Y(k)) FOR EVENT 2

| | -5 | -4 | -3 | -2 | -1 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|
| W(k) | 0.0% | 0.0% | 0.0% | 33.3% | 22.2% | 14.8% | 9.9% | 6.6% | 4.4% | 2.9% | 2.0% | 1.3% | 0.9% | 0.6% | 0.4% | 0.3% | 0.2% | 0.1% | 0.1% | 0.0% | 0.0% |

FIG. 23

EP 3 656 645 B1

EXAMPLE OF CALCULATION IN Step_D IN CASE OF EVENT 3 (DEPARTURE EVENT)

INPUT: PROBABILITY DISTRIBUTION X(i) FOR PRECEDING EVENT (EVENT 2) ON SELF TRAIN LINE

| | -5 | -4 | -3 | -2 | -1 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|
| Y(k) | 0.0% | 0.0% | 0.0% | 33.3% | 22.2% | 14.8% | 9.9% | 6.6% | 4.4% | 2.9% | 2.0% | 1.3% | 0.9% | 0.6% | 0.4% | 0.3% | 0.2% | 0.1% | 0.1% | 0.0% | 0.0% |

Step_D1 — CONVOLUTION OPERATION

| | -5 | -4 | -3 | -2 | -1 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|
| V(k) | 0.0% | 0.0% | 0.0% | 16.7% | 19.4% | 17.1% | 13.5% | 10.0% | 7.2% | 5.1% | 3.5% | 2.4% | 1.6% | 1.1% | 0.7% | 0.5% | 0.3% | 0.2% | 0.2% | 0.1% | 0.0% |

Step_D2 — SHIFT BY MARGIN (= 1)

PROBABILITY DISTRIBUTION W(k) FOR EVENT 3

| | -5 | -4 | -3 | -2 | -1 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|
| W(k) | 0.0% | 0.0% | 16.7% | 19.4% | 17.1% | 13.5% | 10.0% | 7.2% | 5.1% | 3.5% | 2.4% | 1.6% | 1.1% | 0.7% | 0.5% | 0.3% | 0.2% | 0.2% | 0.1% | 0.0% | 0.0% |

Step_D4 — ROUND UP THOSE CORRESPONDING TO VALUES LESS THAN 0

OUTPUT: PROBABILITY DISTRIBUTION Y(k) FOR EVENT 3

| | -5 | -4 | -3 | -2 | -1 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|
| Y(k) | 0.0% | 0.0% | 0.0% | 0.0% | 0.0% | 66.7% | 10.0% | 7.2% | 5.1% | 3.5% | 2.4% | 1.6% | 1.1% | 0.7% | 0.5% | 0.3% | 0.2% | 0.2% | 0.1% | 0.0% | 0.0% |

FIG. 24

EP 3 656 645 B1

EP 3 656 645 B1

(A)

| | -1 MINUTE | 0 MINUTES | 1 MINUTE | 2 MINUTES |
|---|---|---|---|---|
| DELAY PROBABILITY DISTRIBUTION VIA PRECEDING EVENT 1 (E.G., DELAY FROM PRECEDING TRAIN LINE) | 40% | 30% | 20% | 10% |
| DELAY PROBABILITY DISTRIBUTION VIA PRECEDING EVENT 2 (E.G., DELAY FROM PREVIOUS STATION ON SELF TRAIN LINE) | 50% | 40% | 10% | 0% |

(B)

| UPPER : DELAY TIME (MINUTE) LOWER : DELAY PROBABILITY | | PRECEDING EVENT 1 | | | |
|---|---|---|---|---|---|
| | | -1 | 0 | 1 | 2 |
| | | 40% | 30% | 20% | 10% |
| 先行イベント2 | -1 | -1 | 0 | 1 | 2 |
| | 50% | 20% | 15% | 10% | 5% |
| | 0 | 0 | 0 | 1 | 2 |
| | 40% | 16% | 12% | 8% | 4% |
| | 1 | 1 | 1 | 1 | 2 |
| | 10% | 4% | 3% | 2% | 1% |
| | 2 | 2 | 2 | 2 | 2 |
| | 0% | 0% | 0% | 0% | 0% |

(C)

| | -1 MINUTE | 0 MINUTES | 1 MINUTE | 2 MINUTES |
|---|---|---|---|---|
| COMBINED PROBABILITY DISTRIBUTION | 20% | 43% | 27% | 10% |

FIG. 25

| | -1 MINUTE | 0 MINUTES | 1 MINUTE | 2 MINUTES |
|---|---|---|---|---|
| COMBINED PROBABILITY DISTRIBUTION FOR EVENT N | 20% | 43% | 27% | 10% |

ROUND UP

| | -1 MINUTE | 0 MINUTES | 1 MINUTE | 2 MINUTES |
|---|---|---|---|---|
| DELAY PROBABILITY DISTRIBUTION FOR EVENT N | 0% | 63% | 27% | 10% |

FIG. 26

EP 3 656 645 B1

TRAIN : 0001

| STATION | -10 MINUTES | -5 MINUTE | 0 MINUTES | 5 MINUTES | 10 MINUTES | 15 MINUTES | · · · · | 60 MINUTES | 90% VALUE | EXPECTED VALUE |
|---|---|---|---|---|---|---|---|---|---|---|
| S STATION (STATION OF ORIGIN) | — | — | — | — | — | — | · · · · | — | — | — |
| ↓ | 0% | 1% | 60% | 28% | 1% | 0% | · · · · | 0% | 5 MINUTES | 2 MINUTES |
| A STATION | 0% | 0% | 75% | 25% | 0% | 0% | · · · · | 0% | 5 MINUTES | 2 MINUTES |
| ↓ | 0% | 0% | 58% | 34% | 7% | 1% | · · · · | 0% | 5 MINUTES | 4 MINUTES |
| B STATION | 0% | 0% | 82% | 18% | 0% | 0% | · · · · | 0% | 5 MINUTES | 1 MINUTES |
| ↓ | 0% | 0% | 51% | 38% | 9% | 2% | · · · · | 0% | 10 MINUTES | 5 MINUTES |
| C STATION | 0% | 0% | 91% | 9% | 0% | 0% | · · · · | 0% | 0 MINUTES | 1 MINUTES |
| ↓ | 0% | 4% | 62% | 32% | 2% | 0% | · · · · | 0% | 5 MINUTES | 2 MINUTES |
| D STATION | 0% | 0% | 74% | 26% | 0% | 0% | · · · · | 0% | 5 MINUTES | 2 MINUTES |
| ↓ | 0% | 3% | 65% | 29% | 3% | 0% | · · · · | 0% | 5 MINUTES | 3 MINUTES |
| E STATION | 0% | 0% | 94% | 6% | 0% | 0% | · · · · | 0% | 0 MINUTES | 1 MINUTES |
| ↓ | 0% | 6% | 70% | 20% | 3% | 1% | · · · · | 0% | 5 MINUTES | 1 MINUTES |
| F STATION | 0% | 0% | 88% | 12% | 0% | 0% | · · · · | 0% | 5 MINUTES | 3 MINUTES |
| ↓ | 0% | 0% | 64% | 31% | 3% | 2% | · · · · | 0% | 5 MINUTES | 2 MINUTES |
| G STATION | 0% | 0% | 86% | 14% | 0% | 0% | · · · · | 0% | 5 MINUTES | 2 MINUTES |
| ↓ | 0% | 12% | 80% | 7% | 1% | 0% | · · · · | 0% | 5 MINUTES | 1 MINUTES |
| H STATION | — | — | — | — | — | — | · · · · | — | — | — |
| RUN | 0% (AVERAGE) | 3.25% (AVERAGE) | 63.75% (AVERAGE) | 28.62% (AVERAGE) | 3.63% (AVERAGE) | 0.75% (AVERAGE) | · · · · | 0% (AVERAGE) | 10 MINUTES (LARGEST VALUE) | 2.5 MINUTES (AVERAGE) |
| DWELL | 0% (AVERAGE) | 0% (AVERAGE) | 84.28% (AVERAGE) | 15.72% (AVERAGE) | 0% (AVERAGE) | 0% (AVERAGE) | · · · · | 0% (AVERAGE) | 5 MINUTES (LARGEST VALUE) | 1.7 MINUTES (AVERAGE) |

EP 3 656 645 B1

FIG. 27

FIG. 28

EP 3 656 645 B1

DELAY LIMIT EXCESS PROBABILITY: Σ (PROBABILITIES OF DELAYS OF N
AND MORE MINUTES OCCURRING AT CURRENT NODE)/TOTAL NUMBER OF NODES

%

0

N MINUTES

FIG. 29

FIG. 30

EP 3 656 645 B1

FIG. 31

FIG. 32

FIG. 33

FIG. 34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUAN et al.** Optimizing capacity utilization of stations by estimating knock-on train delays. *TRANSPORTATION RESEARCH PART B,* 01 February 2007, vol. 41 (2), 202-217

- **THORSTEN BOKER et al.** Stochastic modelling of delay propagation in large networks. *Journal of Rail Transport Planning & Management,* 01 January 2012, vol. 2, 34-50